# FASCICULE DE BREVET EUROPEEN

(11) **EP 3 642 124 B1**
(45) Date de publication et mention de la délivrance du brevet: **16.02.2022**
(21) Numéro de dépôt: 18737677.7
(22) Date de dépôt: 18.06.2018
(51) Int. Cl.: B65D 19/44, B65D 19/28

(54) **ENSEMBLE COMPORTANT UNE PALETTE DE TRANSPORT DE CHARIOTS ET UN OU PLUSIEURS CHARIOTS**
KOMBINATION AUS EINER TRANSPORTPALETTE FÜR ROLLWAGEN UND EINEM ODER MEHREREN ROLLWAGEN
COMBINATION OF A TRANSPORT PALLET FOR TROLLEYS AND ONE OR MORE TROLLEYS

(30) Priorité: 22.06.2017 FR 1755727
(43) Date de publication de la demande: 29.04.2020
(73) Titulaire: LABADIS SAS, 53000 Laval (FR)
(72) Inventeur:
(74) Mandataire: Santarelli
(86) Numéro de dépôt international: PCT/FR2018/051442
(87) Numéro de publication internationale: WO 2018/234671

(56) Documents cités:
- WO-A2-2004/028231
- DE-A1-102012 001 503
- GB-A- 2 416 527
- NL-C- 2 006 961

## Description

### DOMAINE DE L'INVENTION

L'invention a trait au domaine général de la logistique et en particulier au transport, sur un ensemble pourvu d'une palette et de chariots mobiles.

### ARRIERE-PLAN TECHNOLOGIQUE

Il est connu de transporter des composants fabriqués ou assemblés sur un site, depuis ce site vers un autre site en vue par exemple de leur modification ou de leur utilisation. Ces composants peuvent être disposés et portés par un chariot mobile, ayant communément un châssis et des mécanismes à roulette supportant ce châssis et prévu pour le déplacement du chariot et des composants, tels que par exemple des bacs, qu'il porte. Pour transporter de tels chariots, il existe des palettes prévues pour recevoir ces chariots selon une direction de chargement / déchargement et pour les maintenir dans cette direction durant leur transport.

Le modèle d'utilité allemand DE 20 2006 007 202 décrit une telle palette, qui comporte une tôle pliée de sorte à former deux pistes pour la réception de deux rangées de chariots disposées côtes à côtes. Chaque piste présente un tunnel pour l'introduction d'une fourche d'un système élévateur, pour la préhension de la palette, formant ainsi des tronçons bas et des tronçons hauts permettant le passage des châssis des chariots. La palette comporte en outre une plaque soudée formant butée fixe à une extrémité de la tôle, en bout de pistes, ainsi que des leviers de verrouillage montés sur des profilés qui sont eux-mêmes logés sur les tronçons bas des pistes, à une extrémité opposée de la tôle. Les leviers de verrouillage sont mobiles en rotation de sorte à admettre une position dans laquelle ils viennent directement en appui sur les roulettes des chariots se situant à cette extrémité opposée ; de sorte que chaque rangée de chariots est bloquée entre la plaque et les leviers de verrouillage. La palette est en outre pourvue de petits rebords longeant les tronçons bas de la tôle et rejoignant les deux extrémités de cette tôle, qui sont configurés pour guider les roulettes des chariots sur chaque piste.

La demande de brevet européen EP 2 671 814 décrit une palette du même type que celle décrite ci-dessus, ayant plusieurs plaquettes montées sur les tronçons hauts en bout de pistes de sorte à former des butées fixes à une extrémité de la tôle. La palette comporte en outre un système de verrouillage ayant, sur chaque piste, une plaque mobile montée sur le tronçon haut, s'étendant globalement dans la direction de chargement / déchargement et présentant un bord de retenu saillant verticalement, ainsi qu'un mécanisme à loquet, ressort et bouton poussoir prévu pour verrouiller/déverrouiller la plaque mobile dans une position dans laquelle son bord de retenu vient directement en appui sur le châssis du chariot se situant à l'extrémité opposée de la tôle ; de sorte que chaque rangée de chariots est bloquée entre les plaquettes fixes et un bord de retenu d'une plaque mobile respective. La palette est en outre pourvue de petits rebords longeant les tronçons bas de la tôle et rejoignant les deux extrémités de cette tôle, qui sont configurés pour guider les roulettes des chariots sur chaque piste.

Encore une autre palette du même type est décrite dans la demande de brevet allemand DE 10 2012 001 503. Cette palette comporte un système de verrouillage pourvu d'une tige montée sur le tronçon haut de chacune des pistes et portant trois doigts de blocage situés respectivement le long de la piste respective, aux deux extrémités de la tôle et aussi entre ces deux extrémités. Le système de verrouillage est configuré de sorte que l'actionnement en rotation de l'un quelconque des deux doigts qui sont situés à l'une ou l'autre des deux extrémités de la piste, permet, grâce à la tige, de déplacer aussi le doigt situé entre les deux extrémités dans une position commune parmi deux positions. Cela permet, lorsqu'un seul chariot est chargé sur une piste respective de la palette, de le bloquer entre un des deux doigts situé à l'une des deux extrémités de la piste et le doigt situé entre ces deux extrémités. Les doigts bloquent le chariot par son châssis. La palette est en outre pourvue de petits rebords longeant les tronçons bas de la tôle et rejoignant les deux extrémités de cette tôle, qui sont configurés pour guider les roulettes des chariots sur chaque piste.

On connaît aussi du document WO 2004/028231 un ensemble pourvu d'une palette et de chariots.

### OBJET DE L'INVENTION

L'invention vise à fournir un ensemble, présentant des performances améliorées notamment en termes de commodité et de sûreté.

L'invention propose à cet effet, un ensemble comportant une palette ainsi qu'un ou plusieurs chariots ayant chacun un châssis porté et rendu mobile par un système d'entraînement, ladite palette comportant :
- une plaque de fond ayant au moins une piste s'étendant entre une première extrémité de ladite plaque de fond et une deuxième extrémité de ladite plaque de fond, opposée à ladite première extrémité, ladite au moins une piste étant prévue pour le déplacement d'une seule rangée d'au moins un dit chariot sur ladite palette ;
- un premier côté formé par ladite première extrémité de ladite plaque de fond, un deuxième côté formé par ladite deuxième extrémité de ladite plaque de fond et opposé audit premier côté, un troisième côté raccordant lesdits premier et deuxième côtés et un quatrième côté raccordant lesdits premier et deuxième côtés et opposé audit troisième côté ;
   ladite palette étant caractérisée en ce qu'elle comporte en outre :
- une première joue de guidage assujettie à ladite plaque de fond, définissant ledit troisième côté, présentant une première hauteur prédéterminée et configurée pour pourvoir guider un dit chariot, par son châssis, le long de ladite première joue de guidage ;
- une deuxième joue de guidage assujettie à ladite plaque de fond, définissant ledit quatrième côté, présentant une deuxième hauteur prédéterminée et configurée pour pouvoir guider un dit chariot, par son châssis, le long de ladite deuxième joue de guidage ;
   lesdites première et deuxième joues de guidage étant en outre configurées pour pouvoir maintenir en position ledit ou lesdits chariots guidés entre lesdits troisième et quatrième côtés ;
   ledit ou lesdits châssis étant reçus sur ladite au moins une piste, guidés sur cette dernière par ladite première joue de guidage et par ladite deuxième joue de guidage, et maintenus en position entre lesdits troisième et quatrième côtés.

La palette de l'ensemble selon l'invention permet, grâce à la première joue de guidage et à la deuxième joue de guidage, à la fois de maintenir au moins un chariot par son châssis, entre le troisième côté et le quatrième côté de la palette, et de guider ce chariot aussi par son châssis, entre l'une des première ou deuxième extrémités de la plaque de fond, c'est-à-dire au niveau des entrée et / ou sortie de la piste. Ce maintien et ce guidage sont possibles grâce aux joues de guidage qui forment des butées fixes sur lesquelles vient en appui le châssis.

Un tel maintient et un tel guidage est particulièrement avantageux pour le chargement des chariots sur la palette et / ou le déchargement des chariots de la palette et pour leur transport. La palette selon l'invention est donc particulièrement commode et sûre.

Selon des caractéristiques préférées, simples, commodes et économiques de la palette de l'ensemble selon l'invention :
- lesdites première et deuxième joues de guidage présentent chacune au moins une fenêtre configurée pour permettre l'introduction d'au moins une fourche d'un système élévateur, pour la préhension de ladite palette ;
- ladite plaque de fond présente au moins un tunnel formant, sur ladite au moins une piste, deux tronçons bas séparés d'un tronçon haut, ledit tunnel étant configuré pour permettre l'introduction d'une fourche d'un système élévateur, pour la préhension de ladite palette ;
- ledit au moins un tunnel comporte une première portion de jonction reliant un desdits deux tronçons bas et ledit tronçon haut , et une seconde portion de jonction reliant l'autre desdits tronçons bas et le dit tronçon haut, et ladite première portion de jonction et ladite seconde portion de jonction présentent chacune au moins une fenêtre complémentaire en regard desdites fenêtres ménagées dans lesdites première et deuxième joues de guidage ;
- ladite palette comporte au moins un premier organe de blocage assujetti mécaniquement à l'une ou l'autre des première et deuxième joues de guidage , au niveau de ladite première extrémité de ladite plaque de fond , et mobile entre une première position dans laquelle ladite au moins une piste est dans un état ouvert au niveau de ladite première extrémité et une seconde position dans laquelle ladite au moins une piste est dans un état fermé au niveau de ladite première extrémité ; au moins un deuxième organe de blocage assujetti mécaniquement à l'une ou l'autre des première et deuxième joues de guidage, au niveau de ladite deuxième extrémité de ladite plaque de fond, et mobile entre une première position dans laquelle ladite au moins une piste est dans un état ouvert au niveau de ladite deuxième extrémité et une seconde position dans laquelle ladite au moins une piste est dans un état fermé au niveau de ladite deuxième extrémité ;
- lesdits premier et deuxième organes de blocage respectifs sont sensiblement en forme de L et présentent chacun une première branche assujettie mécaniquement à l'une ou l'autre des première et deuxième joues de guidage, et une deuxième branche prolongeant ladite première branche et configurée pour venir en appui sur le châssis d'un chariot ;
- lesdits premier et deuxième organes de blocage sont pourvus chacun d'une portion en saillie de ladite deuxième branche qui est configurée pour, dans ladite seconde position desdits premier et deuxième organes de blocage respectifs, redresser un timon assujetti audit châssis d'un dit chariot ;
- lesdits premier et deuxième organes de blocage respectifs sont mobiles en rotation, préférentiellement dans un premier plan transversal passant sensiblement par ladite première extrémité de ladite plaque de fond, respectivement par ladite deuxième extrémité de ladite plaque de fond ;
- ladite portion en saillie s'étend dans un deuxième plan transversal décalé par rapport audit premier plan transversal ;
- ladite plaque de fond est formée d'au moins deux tôles pliées et assemblées l'une avec l'autre ;
- ladite première joue de guidage et / ou ladite deuxième joue de guidage sont assemblées par rivetage, ou vissage, ou soudage, ou collage avec ladite plaque de fond ;
- lesdites première et deuxième joues de guidage sont globalement formées par une plaque plane ; et / ou
- ladite première joue de guidage et / ou ladite deuxième joue de guidage présentent respectivement une première et une deuxième hauteurs prédéterminées comprises entre environ 70 mm et environ 200 mm.

### BREVE DESCRIPTION DES DESSINS

L'exposé de l'invention sera maintenant poursuivi par la description détaillée d'exemples de réalisation, donnée ci-après à titre illustratif et non limitatif, en référence aux dessins annexés. Sur ceux-ci :
- la figure 1 illustre partiellement en perspective une palette conforme à un mode de réalisation de l'invention, qui est en prise avec les fourches d'un système élévateur ;
- les figures 2 et 3 sont des vues en coupe repérées II-II et III-III sur la figure 1, montrant la palette mais sans les fourches du système élévateur ;
- la figure 4 illustre en perspective la palette de la figure 1, avec des premiers organes de blocage dans une première position et des deuxièmes organes de blocage dans une seconde position ;
- la figure 5 est une vue en perspective montrant deux palettes comme celle des figures 1 à 4, qui sont ici gerbées ;
- la figure 6 est une vue en perspective d'un ensemble formé de la palette illustrée sur les figures 1 à 4, ici avec ses premiers et deuxièmes organes de blocage qui sont tous dans la seconde position, et formé aussi de plusieurs chariots mobiles chargés sur la palette ;
- les figures 7 et 8 sont des vues en coupe repérées VII-VII et VIII-VIII sur la figure 6 ;
- la figure 9 est un agrandissement partiel de la figure 8, montrant l'avant d'un des chariots, lequel est pourvu d'un timon ici dans une configuration dite relevée-stockée et qui est maintenue sensiblement à la verticale sous l'action d'un des organes de blocage en seconde position ;
- la figure 10 est une vue similaire à celle de la figure 9, mais avec le timon du chariot dans une configuration dite relevé-inclinée, lors du passage de l'organe de blocage depuis de sa première position vers sa seconde position ou inversement ;
- les figures 11 et 12 sont des vues en perspective de l'ensemble de la figure 6, montrant le chargement des chariots sur la palette ;
- la figure 13 est une vue en perspective semblable à celle des figures 11 et 12, mais montrant ici le début du déchargement des chariots de la palette ;
- la figure 14 est un agrandissement partiel de la figure 13, illustrant l'attelage de deux chariots ;
- la figure 15 est une vue semblable à celle de la figure 13, montrant la fin du déchargement des chariots de la palette ;
- les figures 16 à 23 sont des vues similaires à celles des figures 1 à 8, illustrant une palette conforme à une variante de réalisation de l'invention et aussi un ensemble formé d'une telle palette et de chariots mobiles ; et
- les figures 24 à 26, respectivement 27 à 29, sont des vues en perspective de l'ensemble illustré sur la figure 21, montrant le chargement des chariots de la palette, respectivement le déchargement des chariots sur la palette.

### DESCRIPTION DETAILLEE D'EXEMPLES DE REALISATION

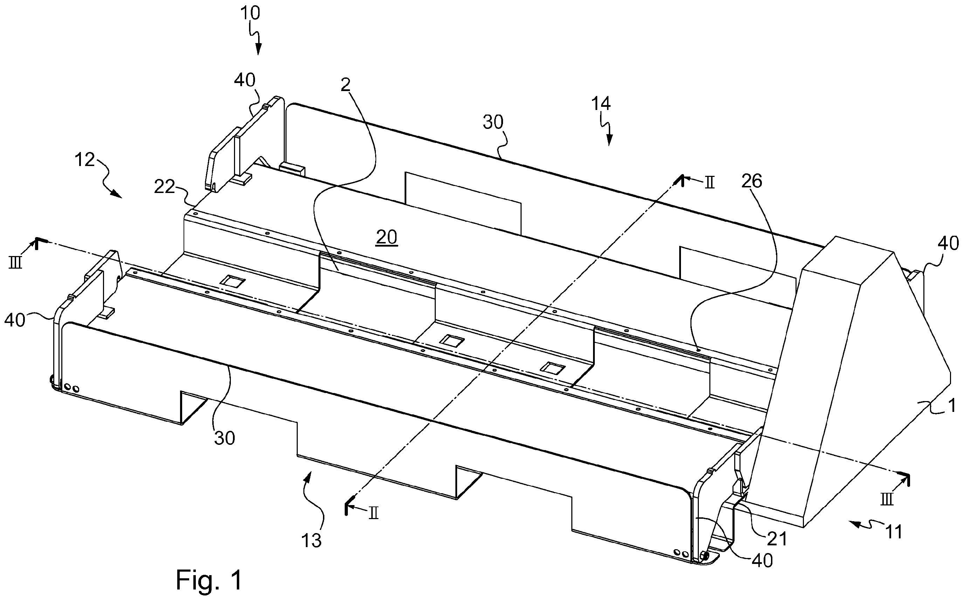

La figure 1 représente une palette 10 de transport de chariots mobiles, ici en prise avec des fourches 2 d'un système élévateur 1, par exemple du type d'un chariot élévateur motorisé.

La palette 10 comporte ici une plaque de fond 20, deux joues de guidage 30 et des organes de blocage 40, avec les joues de guidage 30 et les organes de blocage 40 qui sont chacun assujettis mécaniquement à la plaque de fond 20.

La palette 10 présente un premier côté 11, un deuxième côté 12 opposé au premier côté 11, un troisième côté 13 reliant les premier et deuxième côtés 11 et 12, ainsi qu'un quatrième côté 14 opposé au troisième côté 13 et reliant également les premier et deuxième côtés 11 et 12.

La plaque de fond 20 s'étend longitudinalement entre une première extrémité 21 et une deuxième extrémité 22, lesquelles définissent respectivement les premier et deuxième côtés 11 et 13 de la palette 10.

Les joues de guidage 30 s'étendent longitudinalement entre les première et deuxième extrémités 21 et 22 de la plaque de fond 20, et définissent respectivement les troisième et quatrième côtés 13 et 14 de la palette 10.

Les deux joues de guidage 30 sont donc disposées en regard l'une de l'autre.

Les organes de blocage 40, ici au nombre de quatre, sont chacun disposés au niveau d'une des première et deuxième extrémités 21 et 22, et sont assujettis mécaniquement à la plaque de fond 20, via les joues de guidage 30, sensiblement à la jonction du premier côté 11 ou du deuxième côté 12 avec l'un ou l'autre des troisième et quatrième côté 13 et 14. En d'autres termes, les organes de blocage 40 s'étendent ici depuis l'un ou l'autre des troisième et quatrième côté 13 et 14.

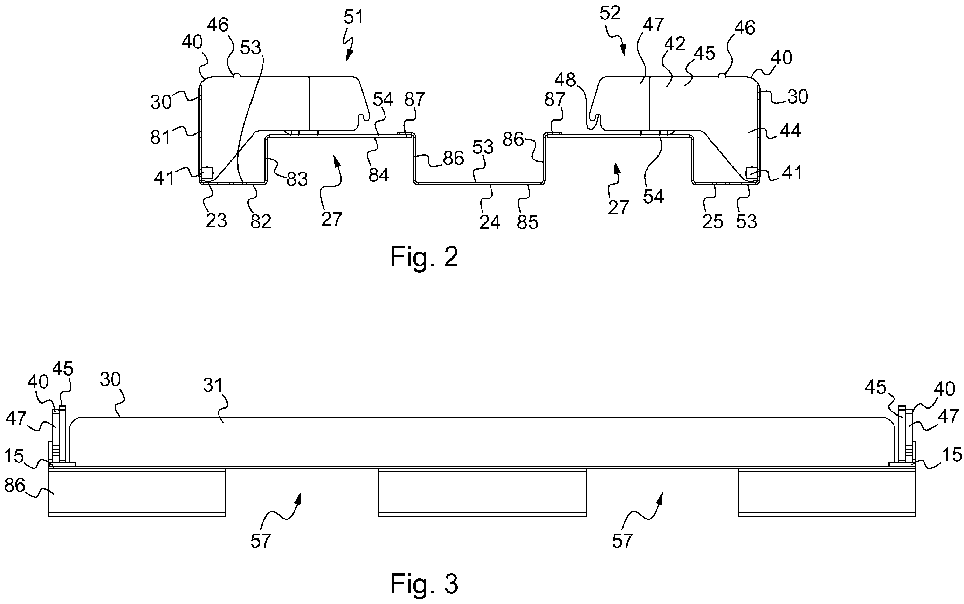

On va maintenant décrire plus en détail la plaque de fond 20, les joues de guidage 30 et les organes de blocage 40, en référence aux figures 1 à 4.

On notera que les deux joues de guidage 30 sont formées par une première et une deuxième joues de guidage ici identiques et que les quatre organes de blocage 40 sont formés par deux premiers et deux deuxièmes organes de blocage qui sont tous également identiques.

La plaque de fond 20 et les première et deuxième joues de guidage 30 sont réalisées en une seule pièce formée par l'assemblage de plusieurs tôles.

En particulier ici, la palette 10 comporte trois tôles assemblées entre elles, dont une première tôle 23 qui est pliée, une deuxième tôle 24 qui est aussi pliée et qui est assemblée avec la première tôle 23, ainsi qu'une troisième tôle 25 qui est également pliée et assemblée avec la deuxième tôle 24.

Les trois tôles 23, 24 et 25 sont en métal et sont assemblées ensemble par rivetage 26.

La première tôle 23 et la troisième tôle 25 présentent chacune une première portion verticale 81, une deuxième portion horizontale 82 raccordée à la première portion verticale 81 par un premier pli, une troisième portion verticale 83 raccordée à la deuxième portion horizontale 82 par un deuxième pli, et une quatrième portion horizontale 84 raccordée à la troisième portion verticale 83 par un troisième pli.

La deuxième tôle 24 présente quant à elle une forme sensiblement en U, ayant une portion de fond 85, deux portions verticales 86 raccordées chacune de part et d'autre de la portion de fond 85 par des quatrièmes plis respectifs, ainsi que deux retours pliés 87 raccordés chacun à une portion verticale 86 respectives.

La deuxième tôle 24 est interposée entre les première et troisième tôles 23 et 25, avec les deux retours pliés 87 qui chevauchent chacun partiellement une extrémité libre d'une des quatrième portions horizontales 84 des première et troisième tôles 23 et 25 et qui sont rivetés sur ces dernières.

La plaque de fond 20 présente une première piste 51 et une deuxième piste 52 pourvues chacune d'un tunnel 27 formant deux tronçons bas 53 et un tronçon haut 54 séparant les deux tronçons bas 53. Sur chacune des première et deuxième pistes 51 et 52, un des tronçons bas 53 est relié au tronçon haut 54 par une première portion de jonction, ici définie par la troisième portion verticale 83 de la première tôle 23 ou celle de la troisième tôle 25 ; tandis que l'autre tronçon bas 53 et relié au tronçon haut 54 par une seconde portion de jonction, ici définie par l'une des portions verticales 86 de la deuxième tôle 24.

Ces tunnels 27 sont configurés pour recevoir des fourches 2 du système élévateur 1 pour la préhension, ici dans la direction longitudinale, de la palette 10.

La première piste 51 et la deuxième piste 52 s'étendent chacune longitudinalement entre la première et la deuxième extrémité 21 et 22 de la plaque de fond 20.

Un des tronçons bas 53 de chaque tunnel 27 est défini au moins partiellement par une des deuxièmes portions horizontales 82 des première et troisième tôles 23 et 25 ; tandis que l'autre des tronçons bas 53 de chaque tunnel 27 est défini par la portion de fond 85 de la deuxième tôle 24.

La première piste 51 et la deuxième piste 52 sont juxtaposées sur la palette 10, c'est-dire disposées côte-à-côte, avec l'autre des tronçons bas 53 qui est défini par la portion de fond 85 et qui est partagé par les première et deuxième pistes 51 et 52.

Chacune des première et deuxième pistes 51, 52 est prévue pour le déplacement d'une seule rangée de chariots mobiles sur la palette 10 (voir ci-après).

On notera que la première piste 51 se situe sur la première tôle 23 et sur la deuxième tôle 24, tandis que la deuxième piste 52 se situe sur la deuxième tôle 24 et sur la troisième tôle 25.

On notera également qu'en entrée et en sortie de chacune des première et deuxième pistes 51 et 52 se trouvent respectivement un premier et un deuxième organes de blocage 40.

La plaque de fond 20 présente en outre, au niveau de ses première et deuxième extrémité 21 et 22, des encoches 28 ménagées sur chacune des deuxièmes portions horizontales 82. Ces encoches 28 sont prévues pour le gerbage de plusieurs palettes 10 (voir ci-après).

La plaque de fond 20 présente également plusieurs trous 55 ménagés sur chacun des tronçons bas 53, qui sont configurés pour positionner les chariots mobiles.

Les première et deuxième joues de guidage 30 sont globalement formées par des plaques planes verticales. La première joue de guidage 30 est ici définie par la première portion verticale 81 de la première tôle 23 et la deuxième joue de guidage 30 est ici définie par la première portion verticale 81 de la troisième tôle 25.

Les première et deuxième joues de guidage 30 présentent chacune une face interne 31 tournée vers l'intérieur de la palette 10, vers les première et deuxième pistes 51 et 52, et une face externe 32 opposée à la face interne 31.

Les première et deuxième joues de guidage 30 ont respectivement des première et deuxième hauteurs prédéterminées, qui sont ici identiques et comprises entre environ 70 mm et environ 200 mm, préférentiellement entre environ 80 mm et environ 160 mm, et encore préférentiellement environ 145 mm ; de sorte à guider les chariots mobiles via des châssis de ces derniers (voir ci-après).

Chacune des première, deuxième et troisième tôles 23 à 25 est pourvue de plusieurs enlèvements de matière 56, sensiblement en forme de U, de sorte à former des fenêtres 34 dans chacune des première et deuxième joues de guidage 30 et des fenêtres complémentaires 57 dans chacune des première et seconde portions de jonction des troisièmes portions verticales 83 des première et troisième tôles 23 et 25 ainsi que dans les portions verticales 86 de la deuxième tôle 24.

Ces fenêtres 34 et fenêtres complémentaires 57 permettent de former des tunnels complémentaires configurés pour recevoir les fourches du système élévateur pour la préhension, dans la direction transversale, de la palette.

On va maintenant décrire plus en détail les organes de blocage 40 de la palette 10, toujours en référence aux figures 1 à 4.

Les quatre organes de blocage 40 sont ici situés sensiblement aux quatre coins de la palette 10.

En particulier, les deux premiers organes de blocage 40 sont situés à l'intersection du premier côté 11 (c'est-à-dire au niveau de la première extrémité 21 de la plaque de fond 20) et respectivement des troisième et quatrième côtés 13 et 14 ; tandis que les deux deuxièmes organes de blocage 40 sont situés à l'intersection du deuxième côté 12 (c'est-à-dire au niveau de la deuxième extrémité 22 de la plaque de fond 20) et respectivement des troisième et quatrième côtés 13 et 14.

Un couple de premier et deuxième organes de blocage 40 est ainsi situé de part et d'autre (c'est-à-dire en entrée / sortie) de chacune des première et deuxième pistes 51 et 52.

Chacun des premier et deuxième organes de blocage 40 est assujetti mécaniquement à une des première ou deuxième joues de guidage 30 respectives, ici par une liaison pivot 41.

Chacun des premier et deuxième organes de blocage 40 est mobile en rotation autour de la liaison pivot 41 respective, dans un plan transversal passant sensiblement par l'une des première et deuxième extrémités respectives 21 et 22 de la plaque de fond 20.

Chacun des premier et deuxième organes de blocage 40 est mobile en rotation entre une première position dans laquelle la première piste 51 ou la deuxième piste 52 est dans un état ouvert, au niveau de la première extrémité 21 ou de la deuxième extrémité 22, et une seconde position dans laquelle la première piste 51 ou la deuxième piste 52 est dans un état fermé, au niveau de la première extrémité 21 ou de la deuxième extrémité 22.

Les premier et deuxième organes de blocage 40 sont mobiles en rotation indépendamment les uns des autres.

Les premier et deuxième organes de blocage 40 permettent ainsi d'ouvrir et / ou de fermer la première piste 51 et / ou la deuxième piste 52, à l'une et / ou l'autre des première et deuxième extrémités 21 et 22 de la plaque de fond 20.

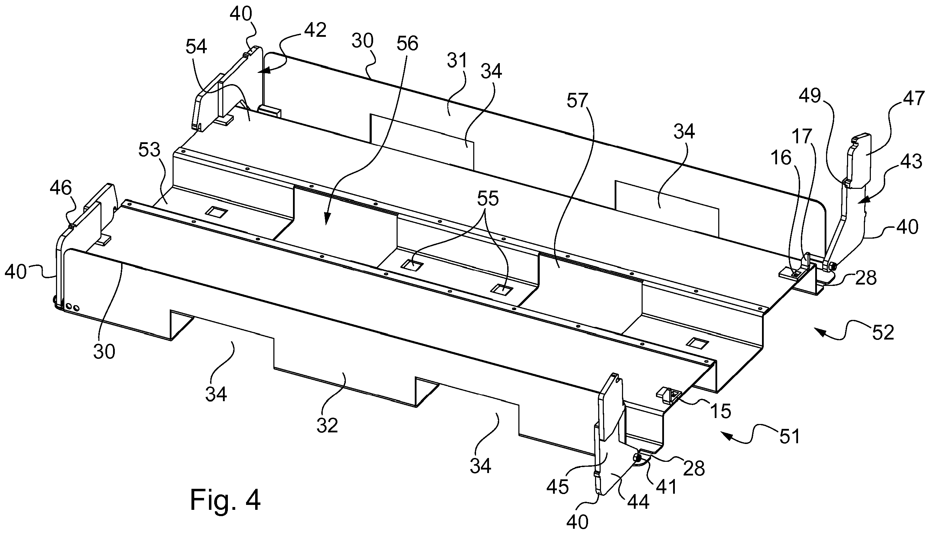

Par exemple, sur la figure 1, les deux premiers organes de blocage 40 et les deux deuxièmes organes de blocage 40 sont ici dans leur seconde position, fermant ainsi les première et deuxième pistes 51 et 52 à la fois à la première extrémité 21 et à la deuxième extrémité 22 de la plaque de fond 20 ; tandis que sur la figure 4, les deux premiers organes de blocage 40 sont passés dans leur première position (les deux deuxièmes organes de blocage 40 restant dans leur second position), ouvrant ainsi les première et deuxième pistes 51 et 52 à la première extrémité 21 (les première et deuxième pistes 51 et 52 restant fermées à la deuxième extrémité 22).

Chaque premier et deuxième organe de blocage 40 comporte ici un corps présentant une première face 42 tournée vers l'intérieur de la palette 10 et une deuxième face 43 opposée à la première face 42 tournée vers l'extérieur de la palette 10, ce corps ayant une forme sensiblement de L, et étant pourvu d'une première branche 44 assujettie mécaniquement à une des première ou deuxième joues de guidage 30, et d'une deuxième branche 45 qui prolonge la première branche 44.

La deuxième branche 45 est configurée pour venir en appui, via la première face 42, sur le châssis d'un chariot mobile lorsque l'organe de blocage 40 (premier ou deuxième) est dans sa seconde position.

On notera que dans cette seconde position, l'organe de blocage 40 (premier ou deuxième) s'étend transversalement à la direction globalement longitudinale de la palette 10 pour faire obstacle et former une butée en entrée et / ou en sortie de la première piste 51, respectivement de la deuxième piste 52.

Au contraire, dans sa première position, l'organe de blocage 40 (premier ou deuxième) s'étend globalement à la verticale.

Chaque corps est pourvu, sur un bord supérieur de sa deuxième branche 45, d'un téton 46 configuré pour coopérer avec une encoche 28 respective, dite encoche complémentaire, d'une autre palette 10 dite aussi palette complémentaire (voir ci-après).

Chaque premier et deuxième organe de blocage 40 comporte une portion 47 en saillie de la deuxième branche 45, formant une plaque avancée du côté de la deuxième face 43.

La plaque avancée 47 s'étend suivant un plan transversal décalé, vers l'extérieur de la palette, par rapport au plan transversal passant par les première et deuxième branches 44 et 45. La plaque avancée 47 s'étend donc ici suivant un plan transversal décalé par rapport au plan transversal passant par la première extrémité 21, respectivement la deuxième extrémité 22.

On notera que la plaque avancée 47 est configurée pour redresser un timon du chariot lorsque l'organe de blocage 40 (premier ou deuxième) se trouve dans sa seconde position (voir ci-après).

La plaque avancée 47 comporte une entaille 48 ménagée dans un bord inférieur de cette plaque avancée et prévue pour permettre la préhension de l'organe de blocage 40 (premier ou deuxième) via un crochet d'une gaffe, pour ramener cet organe de blocage 40 depuis sa seconde position vers sa première position.

La plaque avancée 45 comporte en outre une protubérance 49 ménagée sur son bord inférieur et prévue pour le maintien en position de l'organe de blocage 40 (premier ou deuxième).

La palette 10 comporte des pièces d'appui 15, ici au nombre de quatre, situées sur chaque quatrième portion horizontale 84 au niveau de chacune des première et deuxième extrémités 21 et 22 de la plaque de fond 20.

Chaque pièce d'appui 15 est configurée pour coopérer avec un des premiers ou deuxièmes organes de blocage 40.

Chaque pièce d'appui 15 présente ici une forme sensiblement rectangulaire et est formée en acier.

Chaque pièce d'appui 15 est logée sur le tronçon haut 54 de chacune des première et deuxième pistes 51 et 52, et est pourvue d'un renfoncement 16 configuré pour recevoir une protubérance 49 d'un premier ou deuxième organe de blocage 40, lorsque ce dernier est dans sa seconde position.

Chaque pièce d'appui 15 est également pourvue d'un doigt de guidage 17 s'étendant verticalement en saillie et configuré pour guider au moins partiellement le passage d'un premier ou deuxième organe de blocage 40 depuis sa première position vers sa seconde position, et en particulier pour faciliter l'introduction de la protubérance 49 dans le renfoncement 16.

On notera que l'agencement des pièces d'appui 15 et des premier et deuxième organes de blocage 40 et, en particulier la coopération du doigt de guidage 17 et du renfoncement 16 de chaque pièce d'appui 15 avec un premier ou deuxième organe de blocage 40 respectif, permet de maintenir cet organe de blocage 40 dans sa seconde position. On notera également que cet agencement empêche par exemple le vrillage de l'organe de blocage respectif, en particulier lors du transport de la palette chargée de chariots contre lesquels sont en appui les organes de blocage.

On notera que la palette 10 présente des dimensions prédéterminées qui définissent une surface prédéterminée significative d'une empreinte au sol ou d'un encombrement.

Cette surface prédéterminée, ou empreinte au sol, est ici choisie de manière à être supérieure à la surface normalisée d'une palette normalisée sélectionnée parmi plusieurs palettes normalisées.

En particulier, la palette 10 présente une longueur d'environ 1 251 mm et une largeur d'environ 808 mm, respectivement supérieures à la longueur normalisée de 1 200 mm et à la largeur normalisée de 800 mm.

On notera également que la palette 10 est configurée de sorte que chacun des premiers et deuxièmes organes de blocage 40 de la palette 10 s'étend au moins partiellement, voire en majeure partie, en dehors de la surface normalisée de la palette normalisée sélectionnée, aussi bien lorsqu'il est dans sa première position ou dans sa seconde position.

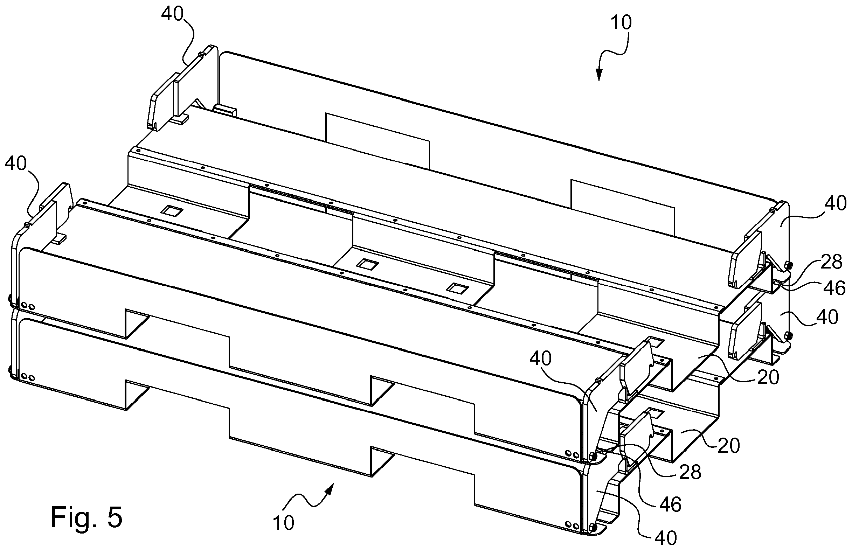

La figure 5 montre deux palettes 10 gerbées, c'est-à-dire superposées, avec chacun des premiers et deuxièmes organes de blocage 40 qui sont dans leur seconde position et avec chacune des encoches 28 de la palette du dessus, dites encoches complémentaires et palette complémentaire, qui reçoit un téton 46 d'un premier ou deuxième organe de blocage 40 (au moins de la palette du dessous).

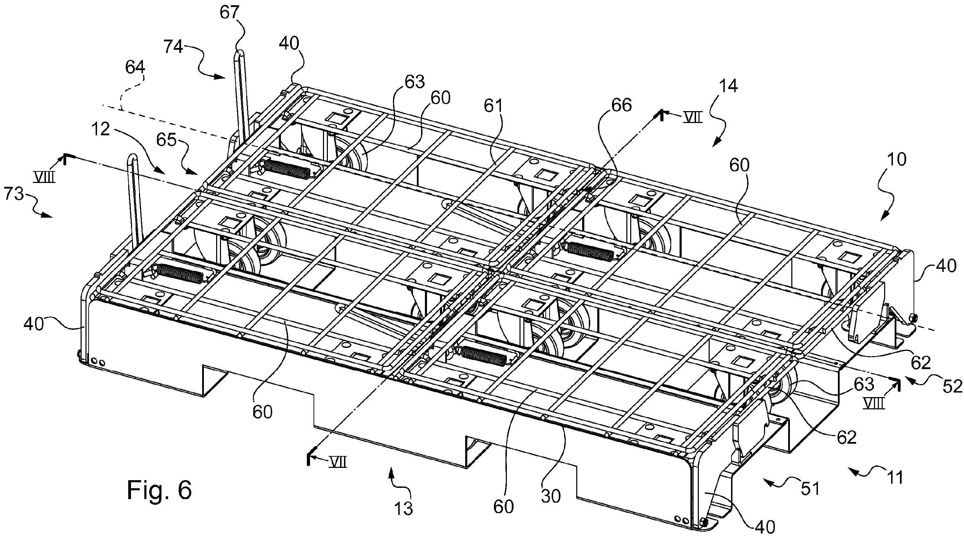

On va maintenant décrire, en référence aux figures 6 à 9, la palette 10 chargée avec quatre chariots mobiles 60.

Chaque chariot 60 a ici des dimensions normalisées, dont une longueur d'environ 600 mm et une largeur d'environ 400 mm.

Chaque chariot 60 comporte un châssis 61 globalement en forme de plateau ayant un contour externe 62 et réalisé en treillis de tiges métalliques soudées à leurs intersections, ainsi qu'un système d'entrainement formé par des mécanismes à roulettes pivotantes 63, qui portent le châssis 61 et rendent mobile le chariot 60.

On notera que le châssis 61 s'étend suivant une direction de déplacement 64 entre un côté avant 65 du chariot 60, situé ici du deuxième côté 12 de la palette 10 et donc au niveau de la deuxième extrémité 22 de la plaque de fond 20, et un côté arrière 66 du chariot 60 opposé au côté avant 65.

Chaque chariot 60 comporte en outre un timon mobile 67 sur le côté avant 65, ainsi qu'un crochet 68 assujetti sur le côté arrière 66.

Le timon 67 est assujetti au châssis 61 par une liaison pivot 69 et présente une extrémité inférieure qui est recourbée et située sous le châssis 61.

Chaque chariot 60 comporte un élément de rappel élastique 70, ici un ressort travaillant en traction, qui est accroché d'une part à un point d'ancrage 71 fixé sous le châssis 61 et d'autre part à l'extrémité inférieure recourbée du timon 67. L'élément de rappel élastique 70 permet de solliciter le timon 67 vers une position redressée, aussi appelée position relevée-stockée.

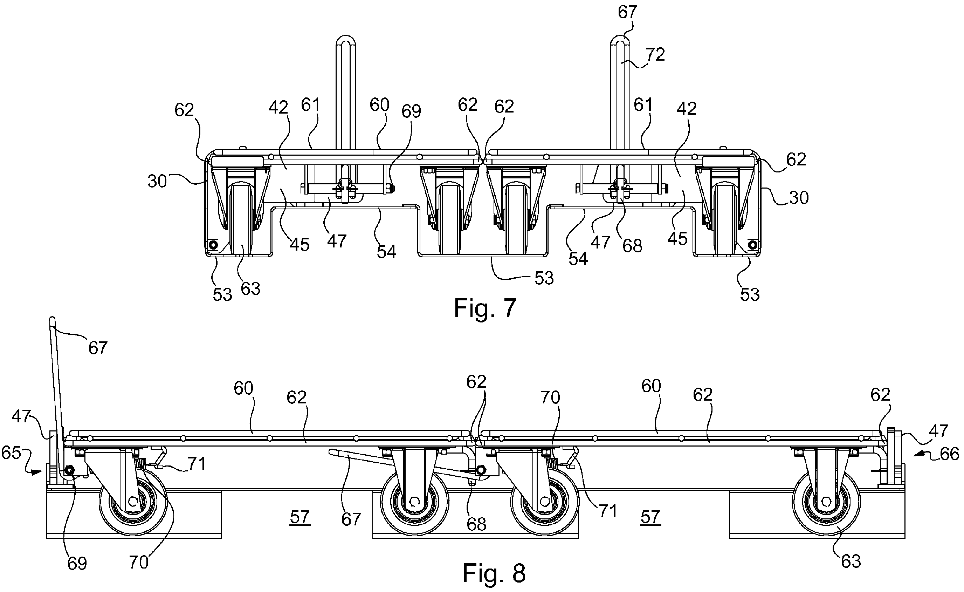

Le timon 67 présente une fente longitudinale 72 qui est configurée pour recevoir le crochet 68 d'un autre chariot 60 qui y est attelé (voir figure 8).

Ainsi qu'illustré sur la figure 6, les chariots 60 sont maintenus sur la palette 10 par l'action des deux premiers et deux deuxièmes organes de blocage 40 qui se trouvent tous dans leur seconde position et aussi par l'action des première et deuxième joues de guidage 30.

En particulier, un premier attelage 73 de deux chariots 60, respectivement un deuxième attelage 74 de deux chariots 60, est chargé et bloqué sur la première piste 51, respectivement sur la deuxième piste 52, entre les première et deuxième extrémités 21 et 22 de la plaque de fond 20.

Chaque chariot 60 de chaque premier et deuxième attelages 73, 74 est maintenu en position sur l'une des première ou deuxième pistes respectives 51, 52 par l'action de la face interne 42 de la deuxième branche 45 d'un des premier ou deuxième organes de blocage 40 se trouvant dans sa seconde position.

En particulier, les deux premiers organes de blocage 40 viennent au contact du côté arrière 66 du contour externe 62 du châssis 61 d'un chariot 60 de chaque premier et deuxième attelage 73 et 74 ; tandis que les deux deuxièmes organes de blocage 40 viennent au contact du contour externe 62 du côté avant 65 du châssis 61 d'un chariot 60 de chaque premier et deuxième attelage 73 et 74.

Les premier et deuxième organes de blocage 40 viennent aussi en appuis contre les pièces d'appui 15, avec les protubérances 49 de ces organes qui sont introduits dans les renfoncements 16 de ces pièces.

On notera que sur la palette 10, les chariots 60 des premier et deuxième attelages 73 et 74 sont dans une position rétractée dans laquelle les timons 67 des chariots 60 situés du premier côté 11 de la palette 10 se trouvent respectivement sous les châssis 61 des chariots 60 situés du deuxième côté 12 de la palette 10 ; avec les crochets 68 des chariots 60 situés sur le deuxième côté 12 de la palette 10 qui se trouvent dans les fentes 72 des timons 67 et à proximité immédiate des chariots 60 situés sur le premier côté 11 de la palette 10.

Les chariots 60 de chacun des premier et deuxième attelages 73 et 74 sont en appui l'un contre l'autre, par le contour externe 62 de leur châssis 61 respectif.

On notera que les timons 67 des chariots 60 de chacun des premier et deuxième attelages 73 et 74 qui sont situés sur le deuxième côté 12 de la palette 10 sont dans la position redressée, ou relevée-stockée.

La plaque avancée 47 de chacun des deuxièmes organes de blocage 40 vient en appui contre le timon 67 d'un chariot 60 respectif pour le redresser sensiblement jusqu'à la verticale, en agissant à l'encontre du ressort 70.

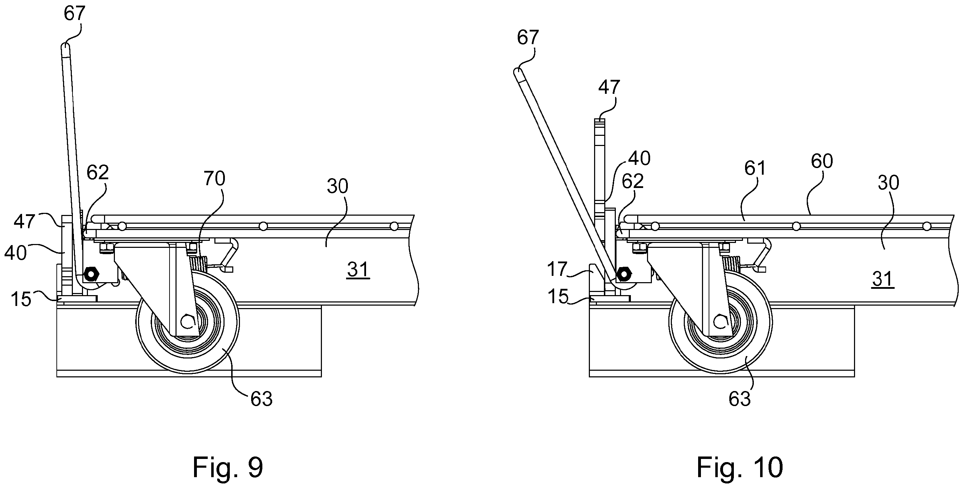

En comparaison, la figure 10 montre le timon 67 dans une position par défaut, aussi appelée relevée-inclinée, lorsque le deuxième organe de blocage 40 se trouve dans sa première position et que sa plaque avancée 47 ne vient pas en appui contre ce timon 67.

Au surplus, les chariots 60 présentent chacun un côté extérieur et un côté intérieur par lesquels ils sont également maintenus transversalement.

En particulier, le contour externe 62 des châssis 61 vient en appui, par le côté extérieur des chariots 60, contre la face interne 31 de la première joue de guidage 30, respectivement de la deuxième joue de guidage 30; tandis que le contour externe 62 des châssis 61 vient en appui, par le côté intérieur des chariots 60, contre le contour externe 62 d'un autre châssis 61.

On notera également que les roulettes des mécanismes 63 des chariots 60 sont positionnées au niveau des trous 55 de la palette 10.

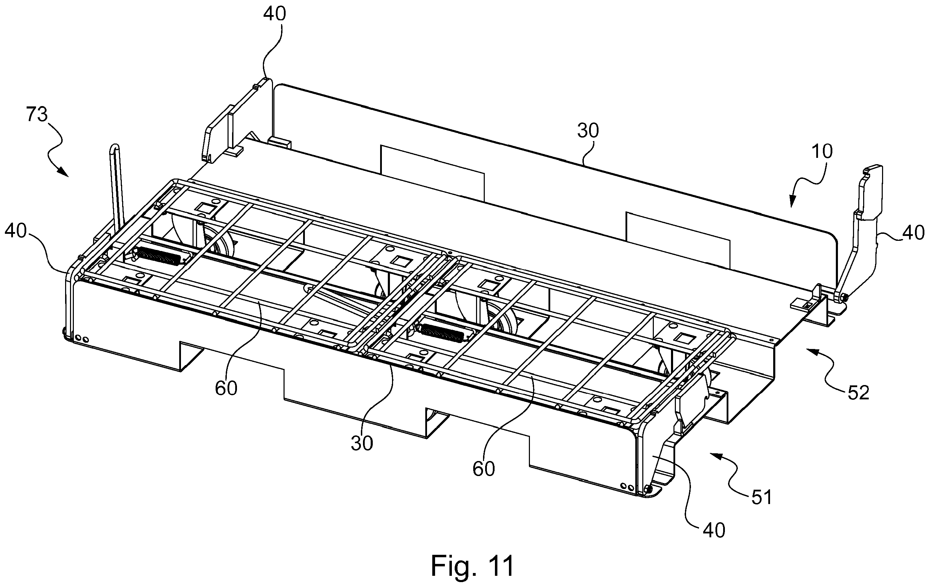

On va maintenant décrire en référence aux figures 11 à 15 le chargement puis le déchargement de la palette 10 avec les chariots mobiles 60.

Sur la figure 11, le premier attelage 73 de chariots 60 est chargé et maintenu bloqué en position, longitudinalement et aussi transversalement du côté extérieur des chariots 60, sur la première piste 51 de la palette 10, par un premier et un deuxième organes de blocage 40 (qui sont dans leur seconde position) et par une première joue de guidage 30.

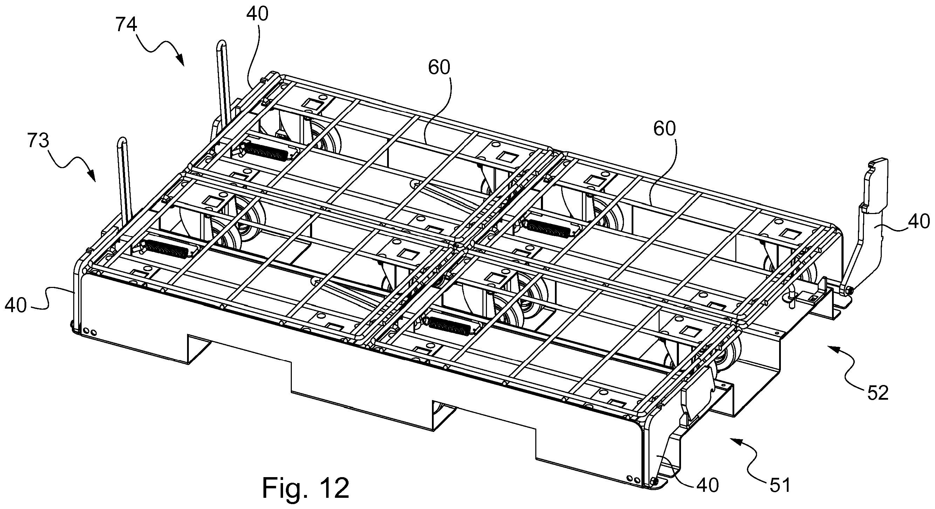

L'autre premier organe de blocage 40 se trouve dans sa première position ouvrant la deuxième piste 52 tandis que l'autre deuxième organe de blocage 40 se trouve dans sa seconde position fermant cette deuxième piste 52 ; de sorte à permettre le chargement du deuxième attelage 74 de chariots 60, ainsi qu'illustré sur la figure 12.

L'autre premier organe de blocage 40 peut alors être passé de sa première position dans sa seconde position pour maintenir et bloquer l'ensemble des chariots 60 et rendre la palette 10 prête pour sa préhension en vue de son transport, ainsi qu'illustré sur la figure 6.

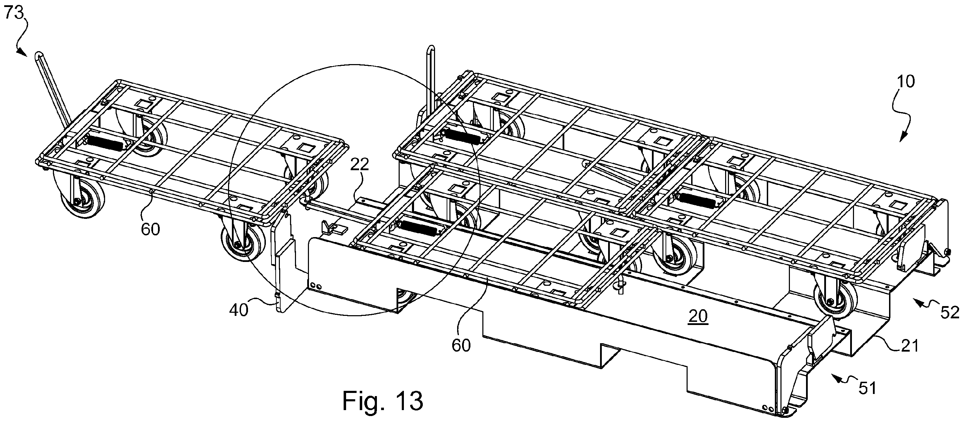

Sur la figure 13, le deuxième organe de blocage 40 de la première piste 51 est dans sa première position ouvrant cette première piste 51 au niveau de la deuxième extrémité 22 de la plaque de fond 20 et les chariots 60 du premier attelage 73 sont ainsi déchargés.

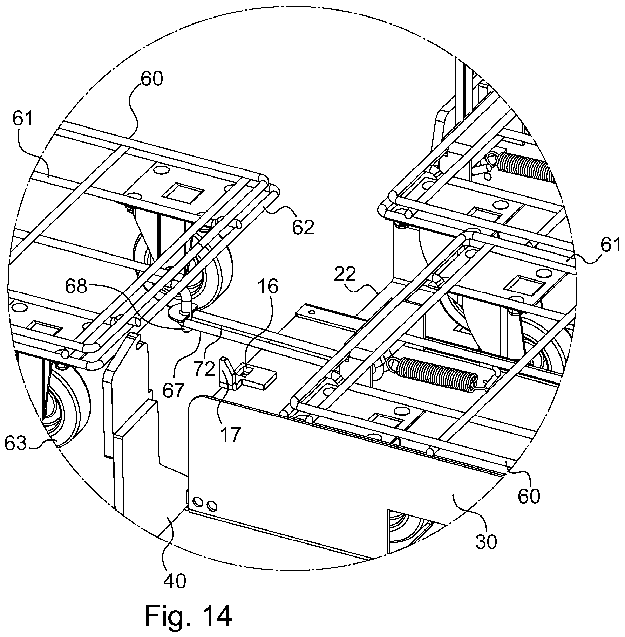

Le chariot 60 au niveau de la première extrémité 21 de la plaque de fond 20 est tracté par le chariot 60 au niveau de la deuxième extrémité 22, grâce au crochet 68 qui coulisse dans la fente 72 et qui vient en butée contre une extrémité supérieure du timon 67 (voir figure 14).

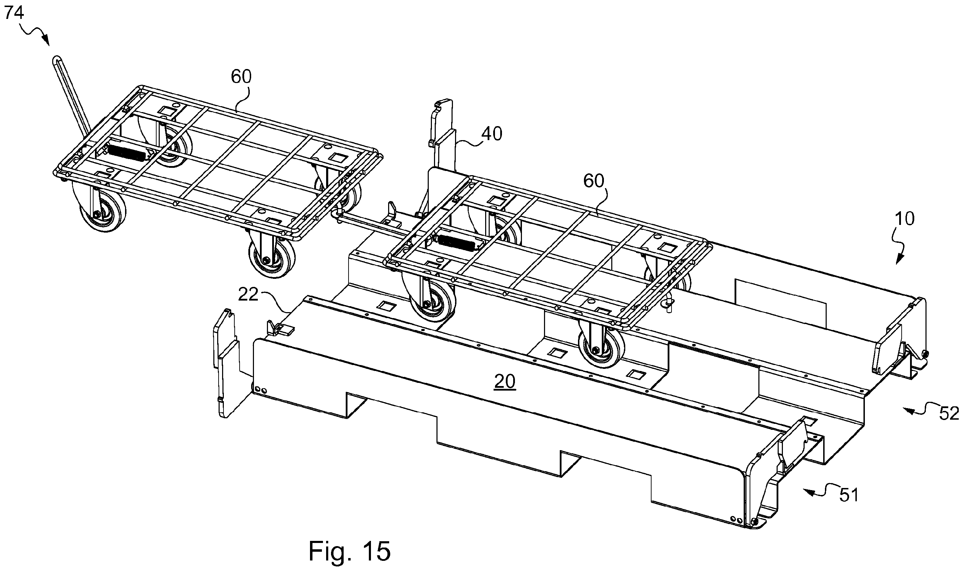

Sur la figure 15, le deuxième organe de blocage 40 de la deuxième piste 52 est dans sa première position ouvrant cette deuxième piste 52 au niveau de la deuxième extrémité 22 de la plaque de fond 20 et les chariots 60 du deuxième attelage 74 sont ainsi déchargés.

On notera qu'en alternative, le chargement et / ou le déchargement des attelages de chariots pourraient être effectués par l'une ou l'autre des première et deuxième extrémités de la plaque de fond, sachant que de tels chargement / déchargement peuvent être effectués par la même première extrémité ou deuxième extrémité.

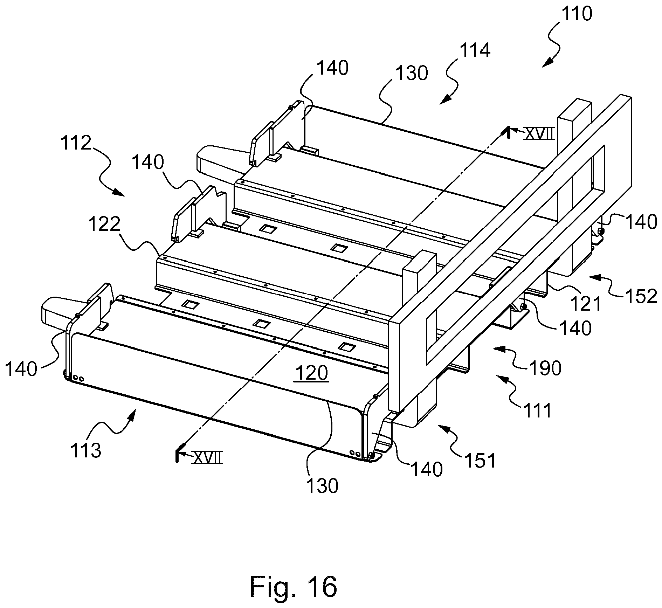

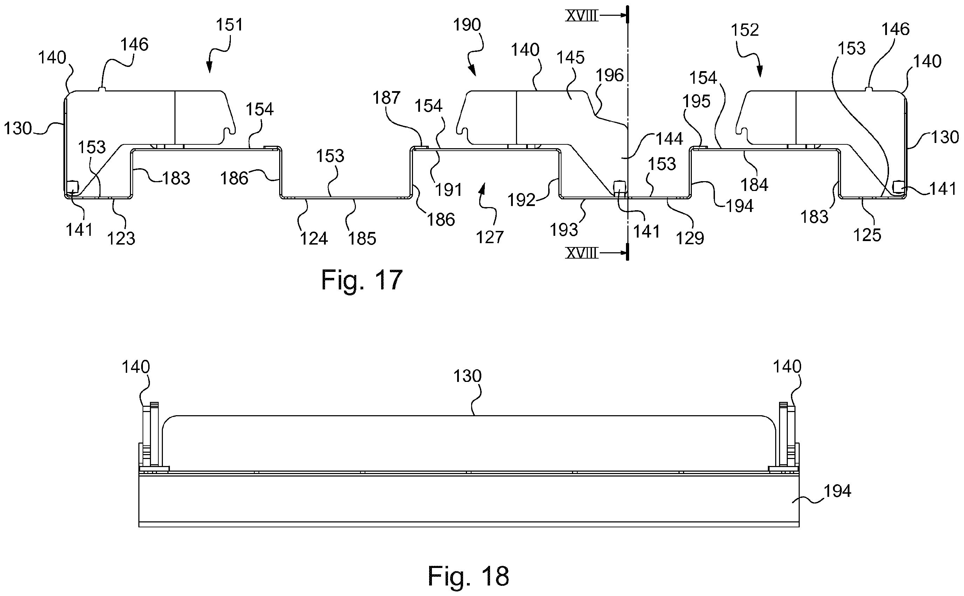

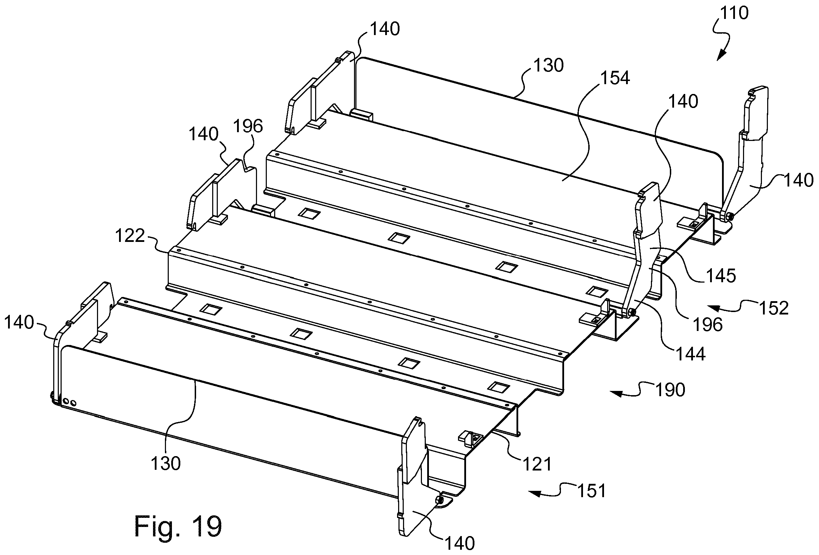

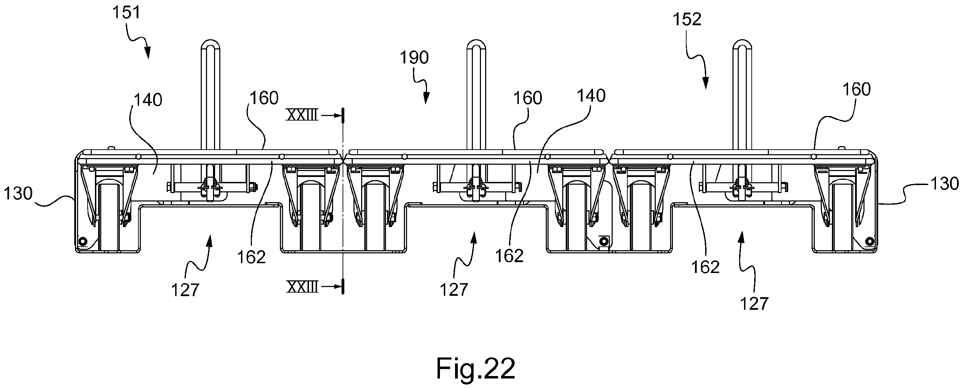

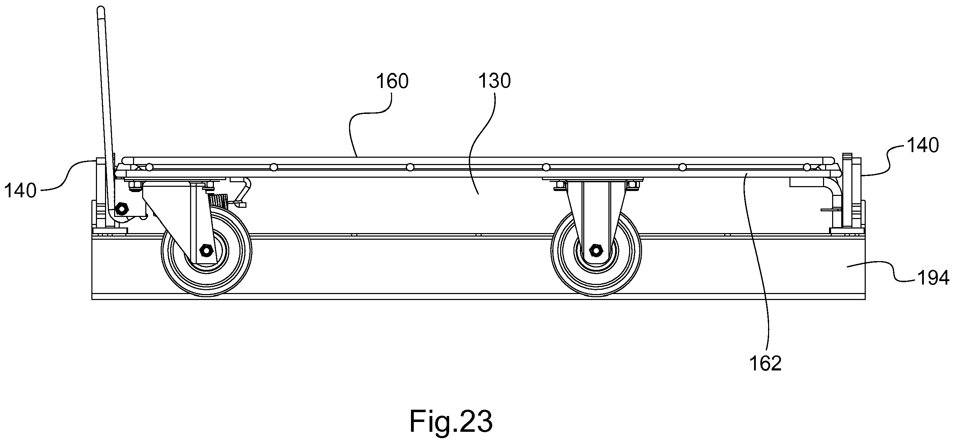

Les figures 16 à 29 représentent une palette 110 de transport de chariots mobiles selon une variante de réalisation de la palette 10 illustrée sur les figures 1 à 15.

D'une manière générale, on a employé pour les éléments similaires, les mêmes numéros de références mais additionnés du nombre 100.

En référence aux figures 16 à 19, on voit que la palette 110 se distingue de la palette 10 en ce que sa longueur, définie entre ses premier et deuxième côtés 111 et 112, équivaut sensiblement à la largeur de la palette 10 et sa largeur, définie entre ses troisième et quatrième côtés 113 et 114, équivaut sensiblement à la longueur de la palette 10 ; de sorte à présenter une surface prédéterminée sensiblement identique à la palette 10.

La palette 110 présente ainsi une piste supplémentaire 190 interposée entre ses première et deuxième pistes 151 et 152, pour accueillir une troisième rangée de chariots mobiles 160. Au contraire, la palette 110 ne peut accueillir ici que des rangées d'un seul chariot mobile 160.

La palette 110 présente par conséquent des joues de guidages 130 moins longues que les joues de guidage 30 et est en outre pourvue de six organes de blocage 140, dont trois premiers organes de blocage au niveau de la première extrémité 121 de la plaque de fond 120 et trois deuxièmes organes de blocage au niveau de la deuxième extrémité 122 de la plaque de fond 120 ou, en d'autres termes, un premier et un deuxième organes de blocage dédiés à chacune des trois pistes 151, 152 et 190.

La palette 110 comporte également une tôle supplémentaire par rapport à la palette 10, à savoir une quatrième tôle 129 qui est pliée et qui est interposée entre et assemblée avec les deuxième et troisième tôles 124 et 125.

La quatrième tôle 129 présente une forme assez similaire à celle de la deuxième tôle 124, ayant une portion de fond 193, deux portions verticales 192 et 194 raccordées chacune de part et d'autre de la portion de fond 193, par des cinquièmes plis respectifs, un premier retour plié 195 raccordé à la portion verticale 194, ainsi qu'un second retour plié 191 allongé et raccordé à la portion verticale 192.

On notera que le second retour plié 191 s'étend ici horizontalement et est bien plus long que le premier retour plié 195, de sorte à former un tronçon haut 154 de la piste supplémentaire 190.

La quatrième tôle 129 est interposée entre les deuxième et troisième tôles 124 et 125, avec le premier retour plié 195 qui chevauche partiellement une extrémité libre de la quatrième portion horizontale 184 de la troisième tôle 125, et avec le second retour plié 191 qui est partiellement chevauché, à son extrémité libre, par un des retours pliés 187 de la deuxième tôle 124.

La piste supplémentaire 190 est pourvue d'un tunnel 127 formant deux tronçons bas 153 et deux tronçon haut 154 séparant les deux tronçons bas 153.

Un des tronçons bas 153 du tunnel 127 de la piste supplémentaire 190 est défini au moins partiellement par la portion de fond 185 de la deuxième tôle 124 et l'autre tronçon bas et défini par la portion de fond 193 de la quatrième tôle 129.

La piste supplémentaire 190 est juxtaposée sur la palette 110 entre la première piste 151 et la deuxième piste 152, c'est-à-dire disposée côte-à-côte avec un tronçon bas 153 qui est défini par la portion de fond 185 de la deuxième tôle 124 et qui est partagé par la première et piste 151 et la piste supplémentaire 190, et l'autre tronçon bas 153 qui est défini par la portion de fond 193 de la quatrième tôle 129 et qui est partagé par la piste supplémentaire 190 et la deuxième piste 152.

A la différence des première, deuxième et troisième tôles 23 à 25 de la palette 10, les première, deuxième et troisième tôles 123 à 125 et aussi la quatrième tôle 129 de la palette 110 sont dépourvues d'enlèvements de matière.

En d'autres termes, les joues de guidages 130 sont dépourvues de fenêtres, les troisièmes portions verticales 183 des première et troisième tôles 123 et 125 sont dépourvues de fenêtres complémentaires, les portions verticales 186, 192 et 194 des deuxième et quatrième tôles 124 et 129 sont aussi dépourvues de fenêtres complémentaires ; de sorte que la palette 110 ne permet pas sa préhension dans la direction transversale, mais seulement dans la direction longitudinale.

Les premier et deuxième organes de blocage 140 situés sur la piste supplémentaire 190 sont structurellement très similaires aux premiers et deuxièmes organes de blocage 140 situés sur les première et deuxième pistes 151 et 152, à l'exception du fait que les liaisons pivots 141 permettant la rotation des premier et deuxième organes de blocage 140 situés sur la piste supplémentaire 190 sont ici situés sur le tronçon bas 153 partagé par la piste supplémentaire 190 et la deuxième piste 152, plutôt que sur les joues de guidage. Ici, ces liaisons pivots 141 sont disposées sensiblement au centre la portion de fond 193 de la quatrième tôle 129.

En outre, les premier et deuxième organes de blocage 140 situés sur la piste supplémentaire 190 sont pourvus chacun d'une échancrure 196 ménagée à la jonction de la première branche 144 et de la deuxième branche 145.

Cette échancrure 196 est configurée pour permettre la passage du premier ou deuxième organes de blocage 140 respectifs situés sur la piste supplémentaire 190, de sa seconde position vers sa première position, sans être gêné par le tunnel 127 de la deuxième piste 152, et en particulier au moins par la portion verticale 194 de la quatrième tôle 129.

Au surplus, les premier et deuxième organes de blocage 140 situés sur la piste supplémentaire 190 sont ici dépourvus de téton 146, à la différence des quatre autres organes de blocage 140 situés sensiblement aux quatre coins de la palette 110.

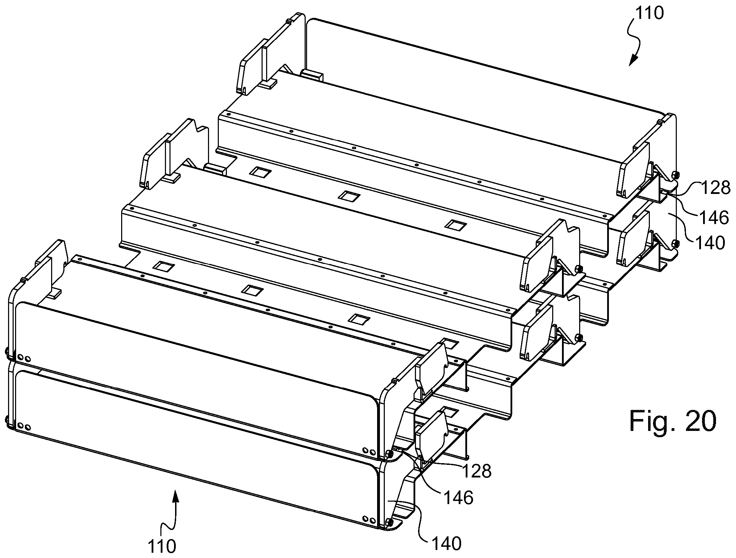

La figure 20 montre deux palettes 110 gerbées, c'est-à-dire superposées, avec chacun des trois premiers et des trois deuxièmes organes de blocage 140 qui sont dans leur seconde position et avec chacune des encoches 128 de la palette du dessus, dites encoches complémentaires et palette complémentaire, qui reçoit un téton 146 d'un premier ou deuxième organe de blocage 140 situé dans un des quatre coins de la palette de dessous.

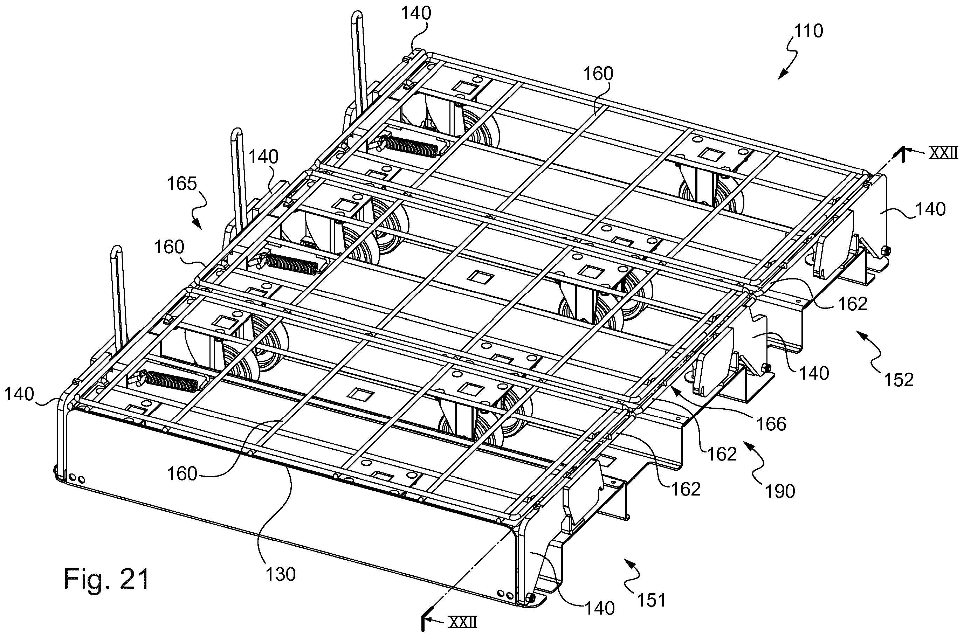

On va maintenant décrire, en référence aux figures 21 à 23, la palette 110 avec trois chariots mobiles 160 chargés respectivement sur chacune des première et deuxième pistes 151, 152 et sur la piste supplémentaire 190.

Les chariots 160 sont identiques aux chariots 60, à la différence qu'ils ont d'autres dimensions normalisées, dont une longueur d'environ 800 mm et une largeur d'environ 400 mm.

Les chariots 160 sont maintenus sur la palette 110 par l'action des trois premiers et trois deuxièmes organes de blocage 140 qui se trouvent tous dans leur seconde position et aussi par l'action des joues de guidage 130.

Le chariot 160 chargé sur la piste supplémentaire 190 vient en appui par son contour externe 162, d'un premier côté, contre le contour externe 162 du châssis du côté extérieur du chariot 160 chargé sur la première piste 151 et, d'un deuxième côté opposé au premier côté, contre le contour externe 162 du châssis du côté intérieur du chariot 160 chargé sur la deuxième piste 152.

Les trois chariots 160 sont ainsi accolés sur les trois pistes 151, 152 et 190, avec le chariot 160 chargé sur la piste supplémentaire 190 qui est interposé et maintenu entre les chariots 160 respectivement chargés sur les première et deuxième pistes 151 et 152.

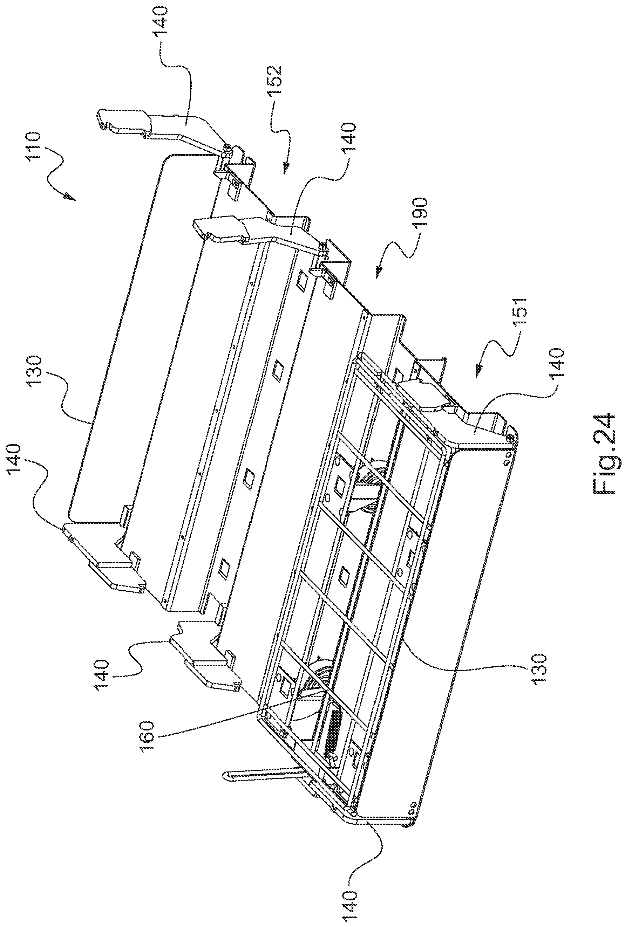

On va maintenant décrire en référence aux figures 24 à 29 le chargement puis le déchargement de la palette 110 avec les chariots mobiles 160.

Sur la figure 24, un chariot 160 est chargé et maintenu bloqué en position, longitudinalement et aussi transversalement du côté extérieur du chariot 160, sur la première piste 151 de la palette 110, par un couple de premier et deuxième organes de blocage 140 (qui sont dans leur seconde position) et par une des joues de guidage 130.

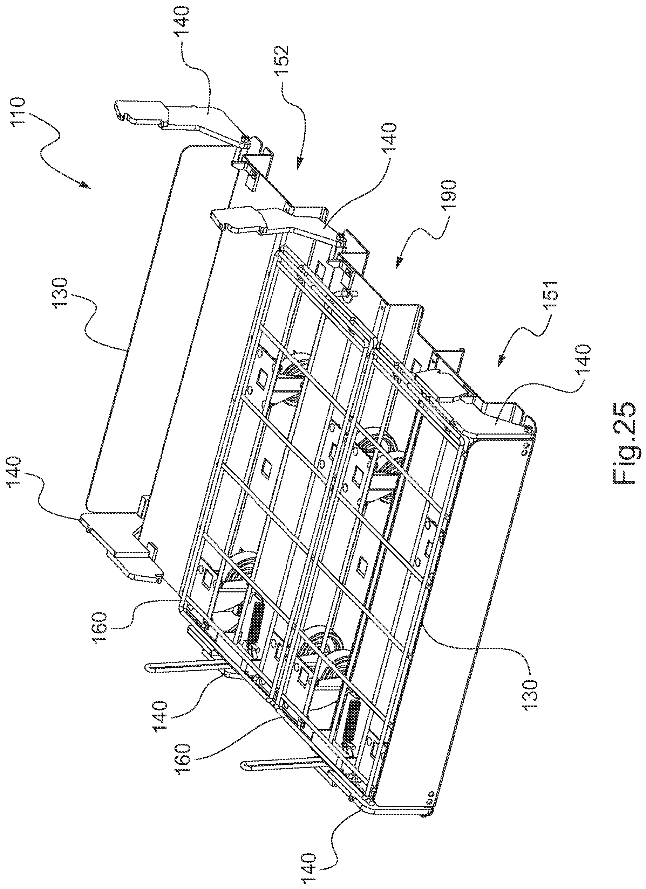

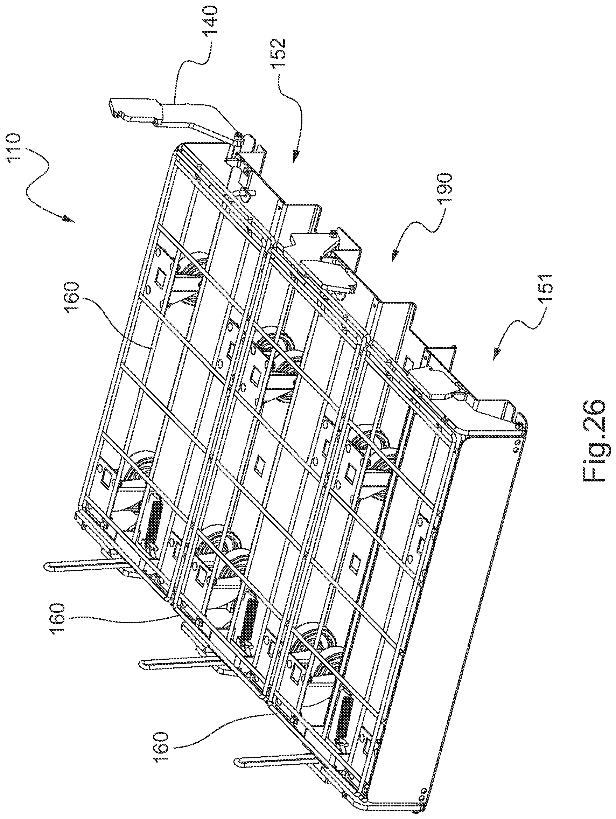

Les deux autres premiers organes de blocage 140 se trouvent dans leur première position ouvrant la piste supplémentaire 190 et la deuxième piste 152, tandis que les deux autres deuxièmes organes de blocage 140 se trouvent dans leur seconde position fermant la piste supplémentaire 190 et la deuxième piste 152; de sorte à permettre le chargement d'un chariot 160 sur la piste supplémentaire 190, ainsi qu'illustré sur la figure 25, puis le passage du premier organe de blocage 140 sur la piste supplémentaire 190 de sa première position vers sa seconde position et le chargement d'un chariot 160 sur la deuxième piste 152, ainsi qu'illustré sur la figure 26.

Le premier organe de blocage 140 de la deuxième piste 152 peut alors être passé de sa première position dans sa seconde position pour maintenir et bloquer l'ensemble des chariots 160 et rendre la palette 110 prête pour sa préhension en vue de son transport, ainsi qu'illustré sur la figure 21.

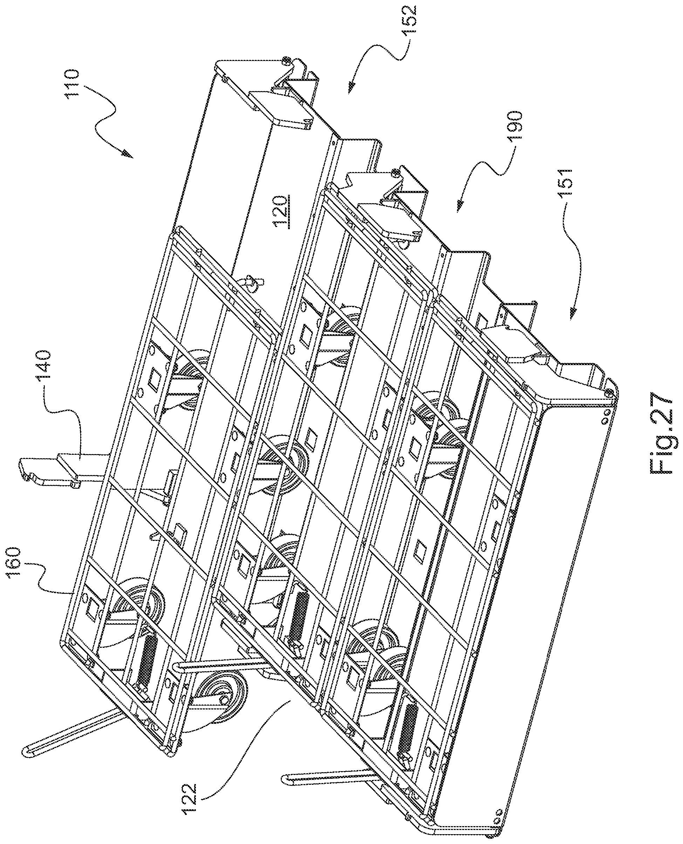

Sur la figure 27, le deuxième organe de blocage 140 de la deuxième piste 152 est dans sa première position ouvrant cette deuxième piste 152 au niveau de la deuxième extrémité 122 de la plaque de fond 120 et le chariot 160 s'y trouvant est ainsi déchargé.

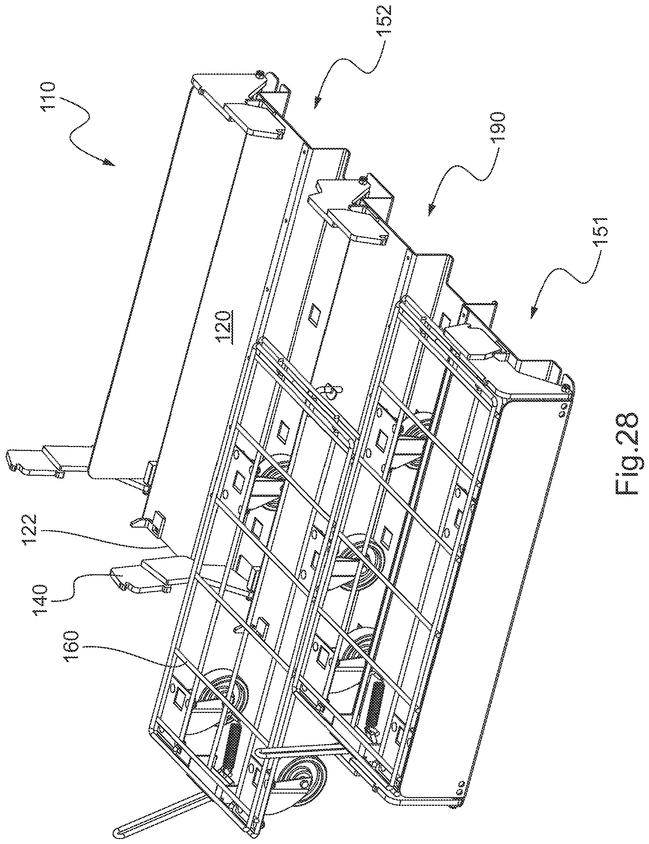

Sur la figure 28, le deuxième organe de blocage 140 de la piste supplémentaire 190 est dans sa première position ouvrant cette piste supplémentaire 190 au niveau de la deuxième extrémité 122 de la plaque de fond 120 et le chariot 160 s'y trouvant est ainsi déchargé.

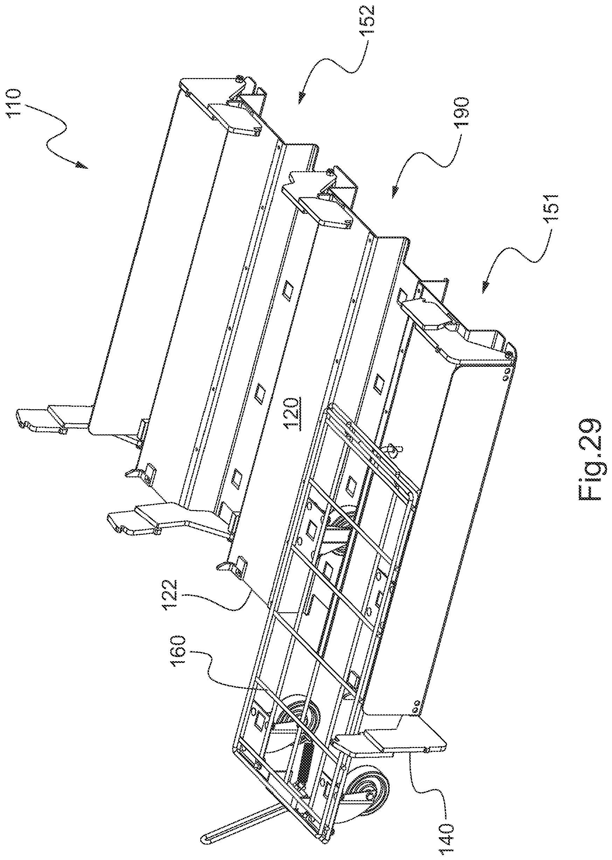

Sur la figure 29, le deuxième organe de blocage 140 de la première piste 151 est dans sa première position ouvrant cette première piste 151 au niveau de la deuxième extrémité 122 de la plaque de fond 120 et le chariot 160 s'y trouvant est ainsi déchargé.

On notera qu'en alternative, le chargement et / ou le déchargement des chariots pourraient être effectués par l'une ou l'autre des première et deuxième extrémités de la plaque de fond, sachant que de tels chargement / déchargement peuvent être effectués par la même première ou deuxième extrémité.

Dans des variantes non illustrées :
- la plaque de fond est formé en une seule tôle par exemple pliée ou emboutie plutôt que par l'assemblage de plusieurs tôles ;
- la plaque de fond présente plus ou moins de pistes et / ou plus ou moins de tunnels, voire est dépourvue de tunnel ;
- la plaque de fond est dépourvue de tunnel et formée en une seule tôle par exemple pliée ou emboutie plutôt que par l'assemblage de plusieurs tôles ;
- les joues de guidage ne s'étendent pas sur tout le côté respectif de la palette mais sont plutôt chacune formées soit par une joue centrale ou par plusieurs joues disposées de manière interrompue sur ce côté ;
- les joues de guidage ne sont pas formées par des plaques planes mais plutôt par une ou plusieurs tiges rigides configurées pour venir à hauteur et au contact du contour externe du ou des châssis ;
- les joues de guidage et la plaque de fond sont assemblées par soudage, ou vissage, ou collage avec la plaque de fond plutôt que par rivetage ;
- les organes de blocage ne sont pas mobiles en rotation mais plutôt mobiles en translation ;
- les organes de blocage ne sont pas montés indirectement sur la plaque de fond via les joues de guidage mais plutôt directement sur la plaque de fond, sur les tronçons bas des pistes ;
- les organes de blocage ne sont pas en forme de L mais présente plutôt une forme rectangulaire ;
- la portion avancée des organes de blocage est plutôt formée par un doigt saillant ;
- les organes de blocage peuvent être dépourvus des entailles et / ou des tétons et / ou des protubérances, et la palette peut aussi être dépourvue des encoches et / ou de pièces d'appui ;
- la palette présente des dimensions différentes de celles mentionnées ci-dessus et les chariots chargés sur la palette présentent des dimensions adaptées ;
- les chariots présentent des timons différents de ceux décrits ci-dessus, par exemple des timons pleins, ou au contraire en sont dépourvus ;
- le châssis des chariots n'est pas réalisé en treillis mais plutôt formé par une plaque pleine ou semi-pleine ; et / ou
- le système d'entraînement des chariots mobiles n'est pas formé par des mécanismes à roulettes mais plutôt par des mécanismes à chenilles ou à patins.

De nombreuses autres variantes sont possibles en fonction des circonstances et l'on rappelle à cet égard que l'invention ne se limite pas aux exemples décrits et représentés, mais est définie par les revendications.

## Revendications

1. Ensemble comportant une palette (10 ; 110) ainsi qu'un ou plusieurs chariots (60 ; 160) ayant chacun un châssis (61) porté et rendu mobile par un système d'entraînement (63), ladite palette (10 ; 110) comportant :
- une plaque de fond (20 ; 120) ayant au moins une piste (51, 52 ; 151, 152, 190) s'étendant entre une première extrémité (21 ; 121) de ladite plaque de fond (20 ; 120) et une deuxième extrémité (22 ; 122) de ladite plaque de fond (20 ; 120), opposée à ladite première extrémité (21 ; 121), ladite au moins une piste (51, 52 ; 151, 152, 190) étant prévue pour le déplacement d'une seule rangée d'au moins un dit chariot (60 ; 160) sur ladite palette (10 ; 110);
- un premier côté (11 ; 111) formé par ladite première extrémité (21 ; 121) de ladite plaque de fond (20 ; 120), un deuxième côté (12 ; 112) formé par ladite deuxième extrémité (22 ; 122) de ladite plaque de fond (20 ; 120) et opposé audit premier côté (11 ; 111), un troisième côté (13; 113) raccordant lesdits premier (11 ; 111) et deuxième (12; 112) côtés et un quatrième côté (14; 114) raccordant lesdits premier (11 ; 111) et deuxième côtés (12 ; 112) et opposé audit troisième côté (13 ; 113);
- une première joue de guidage (30; 130) assujettie à ladite plaque de fond (20 ; 120), définissant ledit troisième côté (13; 113);
- une deuxième joue de guidage (30 ; 130) assujettie à ladite plaque de fond (20 ; 120), définissant ledit quatrième côté (14; 114); lesdites première et deuxième joues de guidage (30 ; 130) étant en outre configurées pour pouvoir maintenir en position ledit ou lesdits chariots (60 ; 160) guidés entre lesdits troisième (13 ; 113) et quatrième côtés (14 ; 114) ; ledit ensemble étant **caractérisé en ce que**:
la première joue de guidage (30; 130), présentant une première hauteur prédéterminée, est configurée pour pourvoir guider un dit chariot (60; 160), par son châssis (61), le long de ladite première joue de guidage (30; 130);
la deuxième joue de guidage (30; 130), présentant une deuxième hauteur prédéterminée, est configurée pour pouvoir guider un dit chariot (60; 160), par son châssis (61), le long de ladite deuxième joue de guidage (30; 130);
ledit ou lesdits châssis (61) étant reçus sur ladite au moins une piste (51, 52 151, 152, 190), guidés sur cette dernière par ladite première joue de guidage (30 ; 130) et par ladite deuxième joue de guidage (30 ; 130), et maintenus en position entre lesdits troisième (13 ; 113) et quatrième (14 ; 114) côtés.

2. Ensemble selon la revendication 1, **caractérisée en ce que** lesdites première et deuxième joues de guidage (30 ; 130) présentent chacune au moins une fenêtre (34) configurée pour permettre l'introduction d'au moins une fourche (2) d'un système élévateur (1), pour la préhension de ladite palette (10 ; 110).

3. Ensemble selon l'une des revendications 1 et 2, **caractérisée en ce que** ladite plaque de fond (20 ; 120) présente au moins un tunnel (27 ; 127) formant, sur ladite au moins une piste (51, 52 ; 151, 152, 190), deux tronçons bas (53 ; 153) séparés d'un tronçon haut (54 ; 154), ledit tunnel (27 ; 127) étant configuré pour permettre l'introduction d'une fourche (2) d'un système élévateur (1), pour la préhension de ladite palette (10 ; 110).

4. Ensemble selon les revendications 2 et 3, **caractérisée en ce que** ledit au moins un tunnel (27 ; 127) comporte une première portion de jonction reliant un desdits deux tronçons bas (53 ; 153) et ledit tronçon haut (54 ; 154), et une seconde portion de jonction reliant l'autre desdits tronçons bas (53 ; 153) et le dit tronçon haut (54 ; 154), et ladite première portion de jonction et ladite seconde portion de jonction présentent chacune au moins une fenêtre complémentaire (57) en regard desdites fenêtres (34) ménagées dans lesdites première et deuxième joues de guidage (30 ; 130).

5. Ensemble selon l'une quelconque des revendications 1 à 4, **caractérisée en ce qu'**elle comporte :
- au moins un premier organe de blocage (40 ; 140) assujetti mécaniquement à l'une ou l'autre des première et deuxième joues de guidage (30 ; 130), au niveau de ladite première extrémité (21 ; 121) de ladite plaque de fond (20 ; 120), et mobile entre une première position dans laquelle ladite au moins une piste (51, 52 ; 151, 152, 190) est dans un état ouvert au niveau de ladite première extrémité (21 ; 121) et une seconde position dans laquelle ladite au moins une piste (51, 52 ; 151, 152, 190) est dans un état fermé au niveau de ladite première extrémité (21 ; 121);
- au moins un deuxième organe de blocage (40 ; 140) assujetti mécaniquement à l'une ou l'autre des première et deuxième joues de guidage (30 ; 130), au niveau de ladite deuxième extrémité (22 ; 122) de ladite plaque de fond (20 ; 120), et mobile entre une première position dans laquelle ladite au moins une piste est dans un état ouvert au niveau de ladite deuxième extrémité (22 ; 122) et une seconde position dans laquelle ladite au moins une piste (51, 52 ; 151, 152, 190) est dans un état fermé au niveau de ladite deuxième extrémité (22 ; 122).

6. Ensemble selon la revendication 5, **caractérisée en ce que** lesdits premier et deuxième organes de blocage (40 ; 140) respectifs sont sensiblement en forme de L et présentent chacun une première branche (44 ; 144) assujettie mécaniquement à l'une ou l'autre des première et deuxième joues de guidage (30 ; 130), et une deuxième branche (45 ; 145) prolongeant ladite première branche (44; 144) et configurée pour venir en appui sur le châssis (61 ; 161) d'un chariot (60 ; 160).

7. Ensemble selon la revendication 6, **caractérisée en ce que** lesdits premier et deuxième organes de blocage (40 ; 140) sont pourvus chacun d'une portion en saillie (47) de ladite deuxième branche (45 ; 145) qui est configurée pour, dans ladite seconde position desdits premier et deuxième organes de blocage (40 ; 140) respectifs, redresser un timon (67) assujetti audit châssis (61) d'un dit chariot (60 ; 160).

8. Ensemble selon l'une quelconque des revendications 5 à 7, **caractérisée en ce que** lesdits premier et deuxième organes de blocage (40 ; 140) respectifs sont mobiles en rotation, préférentiellement dans un premier plan transversal passant sensiblement par ladite première extrémité (21 ; 121) de ladite plaque de fond (20 ; 120), respectivement par ladite deuxième extrémité (22 ; 122) de ladite plaque de fond (20 ; 120).

9. Ensemble selon les revendications 7 et 8, **caractérisée en ce que** ladite portion en saillie (47) s'étend dans un deuxième plan transversal décalé par rapport audit premier plan transversal.

10. Ensemble selon l'une quelconque des revendications 1 à 9, **caractérisée en ce que** ladite plaque de fond (20 ; 120) est formée d'au moins deux tôles pliées (23, 24, 25 ; 123, 124, 125, 129) et assemblées l'une avec l'autre.

11. Ensemble selon l'une quelconque des revendications 1 à 10, **caractérisée en ce que** ladite première joue de guidage et / ou ladite deuxième joue de guidage (30 ; 130) sont assemblées par rivetage, ou vissage, ou soudage, ou collage avec ladite plaque de fond (20 ; 120).

12. Ensemble selon l'une quelconque des revendications 1 à 11, **caractérisée en ce que** lesdites première et deuxième joues de guidage (30 ; 130) sont globalement formées par une plaque plane (81).

13. Ensemble selon l'une quelconque des revendications 1 à 12, **caractérisée en ce que** ladite première joue de guidage et / ou ladite deuxième joue de guidage (30 ; 130) présentent respectivement une première et une deuxième hauteurs prédéterminées comprises entre environ 70 mm et environ 200 mm.

## Patentansprüche

1. Anordnung mit einer Palette (10; 110) sowie einem oder mehreren Rollwagen (60; 160), die jeweils einen Rahmen (61) aufweisen, der von einem Antriebssystem (63) getragen und dadurch beweglich gemacht wird, wobei die Palette (10; 110) enthält:
- eine Bodenplatte (20; 120) mit zumindest einer Spur (51, 52; 151, 152, 190), die sich zwischen einem ersten Ende (21; 121) der Bodenplatte (20; 120) und einem zweiten Ende (22; 122) der Bodenplatte (20; 120), das dem ersten Ende (21; 121) gegenüberliegt, erstreckt, wobei die zumindest eine Spur (51, 52; 151, 152, 190) für die Verlagerung einer einzelnen Reihe von dem zumindest einen Rollwagen (60; 160) auf der Palette (10; 110) vorgesehen ist;
- eine erste Seite (11; 111), die durch das erste Ende (21; 121) der Bodenplatte (20; 120) gebildet ist, eine zweite Seite (12; 112), die durch das zweite Ende (22; 122) der Bodenplatte (20; 120) gebildet ist und der ersten Seite (11; 111) gegenüberliegt, eine dritte Seite (13; 113), die die erste (11; 111) und die zweite (12; 112) Seite verbindet, und eine vierte Seite (14; 114), die die erste (11; 111) und die zweite (12; 112) Seite verbindet und der dritten Seite (13; 113) gegenüberliegt;
- eine erste Führungswange (30; 130), die an der Bodenplatte (20; 120) fixiert ist und die dritte Seite (13; 113) definiert,
- eine zweite Führungswange (30; 130), die an der Bodenplatte (20; 120) fixiert ist und die vierte Seite (14; 114) definiert,
wobei die erste und die zweite Führungswange (30; 130) ferner dazu ausgelegt sind, den bzw. die Rollwagen (60; 160), die zwischen der dritten (13; 113) und der vierten Seite (14; 114) geführt werden, in Position halten zu können;
wobei die Anordnung **dadurch gekennzeichnet ist, dass**:
die eine erste vorbestimmte Höhe aufweisende erste Führungswange (30; 130) dazu ausgelegt ist, einen Rollwagen (60; 160) mit seinem Rahmen (61) entlang der ersten Führungswange (30; 130) führen zu können;
die eine zweite vorbestimmte Höhe aufweisende zweite Führungswange (30; 130) dazu ausgelegt ist, einen Rollwagen (60; 160) mit seinem Rahmen (61) entlang der zweiten Führungswange (30; 130) führen zu können;
wobei der bzw. die Rahmen (61) auf der zumindest einen Spur (51, 52; 151, 152, 190) aufgenommen sind, auf dieser durch die erste Führungswange (30; 130) und durch die zweite Führungswange (30; 130) geführt werden und zwischen der dritten (13; 113) und der vierten (14; 114) Seite in Position gehalten werden.

2. Anordnung nach Anspruch 1, **dadurch gekennzeichnet, dass** die erste und die zweite Führungswange (30; 130) jeweils zumindest ein Fenster (34) aufweisen, das dazu ausgelegt ist, das Einführen zumindest einer Gabel (2) eines Hebesystems (1) zum Greifen der Palette (10; 110) zu ermöglichen.

3. Anordnung nach einem der Ansprüche 1 und 2, **dadurch gekennzeichnet, dass** die Bodenplatte (20; 120) zumindest einen Tunnel (27; 127) aufweist, der auf der zumindest einen Spur (51, 52; 151, 152, 190) zwei untere Abschnitte (53; 153) bildet, die von einem oberen Abschnitt (54; 154) getrennt sind, wobei der Tunnel (27; 127) dazu ausgelegt ist, das Einführen einer Gabel (2) eines Hebesystems (1) zum Greifen der Palette (10; 110) zu ermöglichen.

4. Anordnung nach Anspruch 2 und 3, **dadurch gekennzeichnet, dass** der zumindest eine Tunnel (27; 127) einen ersten Verbindungsabschnitt, der den einen der beiden unteren Abschnitte (53; 153) mit dem oberen Abschnitt (54; 154) verbindet, und einen zweiten Verbindungsabschnitt aufweist, der den anderen der unteren Abschnitte (53; 153) mit dem oberen Abschnitt (54; 154) verbindet, wobei der erste Verbindungsabschnitt und der zweite Verbindungsabschnitt jeweils zumindest ein komplementäres Fenster (57) aufweisen, das den in der ersten und der zweiten Führungswange (30; 130) ausgebildeten Fenstern (34) gegenüberliegt.

5. Anordnung nach einem der Ansprüche 1 bis 4, **dadurch gekennzeichnet, dass** sie enthält:
- zumindest ein erstes Blockierorgan (40; 140), das mechanisch an der einen oder anderen der ersten und zweiten Führungswange (30; 130) im Bereich des ersten Endes (21; 121) der Bodenplatte (20; 120) fixiert ist und zwischen einer ersten Position, in der die zumindest eine Spur (51, 52; 151, 152, 190) sich an dem ersten Ende (21; 121) in einem offenen Zustand befindet, und einer zweiten Position verlagerbar ist, in der sich die zumindest eine Spur (51, 52; 151, 152, 190) an dem ersten Ende (21; 121) in einem geschlossenen Zustand befindet;
- zumindest ein zweites Blockierorgan (40; 140), das mechanisch an der einen oder anderen der ersten und zweiten Führungswange (30; 130) an dem zweiten Ende (22; 122) der Bodenplatte (20; 120) fixiert ist und zwischen einer ersten Position, in der sich die zumindest eine Spur an dem zweiten Ende (22; 122) in einem offenen Zustand befindet, und einer zweiten Position verlagerbar ist, in der sich die zumindest eine Spur (51, 52; 151, 152, 190) an dem zweiten Ende (22; 122) in einem geschlossenen Zustand befindet.

6. Anordnung nach Anspruch 5, **dadurch gekennzeichnet, dass** das jeweilige erste und zweite Blockierorgan (40; 140) im Wesentlichen L-förmig ist und jeweils einen ersten Schenkel (44; 144), der mechanisch an der einen oder anderen der ersten und zweiten Führungswange (30; 130) fixiert ist, und einen zweiten Schenkel (45; 145) aufweist, der den ersten Schenkel (44; 144) fortsetzt und dazu ausgelegt ist, in Anlage an den Rahmen (61; 161) eines Rollwagens (60; 160) zu gelangen.

7. Anordnung nach Anspruch 6, **dadurch gekennzeichnet, dass** das erste und das zweite Blockierorgan (40; 140) jeweils mit einem vorstehenden Abschnitt (47) des zweiten Schenkels (45; 145) versehen sind, der dazu ausgelegt ist, in der zweiten Position des jeweiligen ersten und zweiten Blockierorgans (40; 140) eine Deichsel (67) aufzurichten, die an dem Rahmen (61) eines Rollwagens (60; 160) fixiert ist.

8. Anordnung nach einem der Ansprüche 5 bis 7, **dadurch gekennzeichnet, dass** das erste und das zweite Blockierorgan (40; 140) jeweils drehbar sind, vorzugsweise in einer ersten Querebene, die im Wesentlichen durch das erste Ende (21; 121) der Bodenplatte (20; 120) bzw. durch das zweite Ende (22; 122) der Bodenplatte (20; 120) verläuft.

9. Anordnung nach Anspruch 7 und 8, **dadurch gekennzeichnet, dass** sich der vorspringende Abschnitt (47) in einer zweiten Querebene erstreckt, die bezüglich der ersten Querebene versetzt ist.

10. Anordnung nach einem der Ansprüche 1 bis 9, **dadurch gekennzeichnet, dass** die Bodenplatte (20; 120) aus zumindest zwei gebogenen und miteinander verbundenen Blechen (23, 24, 25; 123, 124, 125, 129) gebildet ist.

11. Anordnung nach einem der Ansprüche 1 bis 10, **dadurch gekennzeichnet, dass** die erste Führungswange und/oder die zweite Führungswange (30; 130) durch Vernieten oder Verschrauben oder Verschweißen oder Verkleben mit der Bodenplatte (20; 120) verbunden sind.

12. Anordnung nach einem der Ansprüche 1 bis 11, **dadurch gekennzeichnet, dass** die erste und die zweite Führungswange (30; 130) insgesamt aus einer ebenen Platte (81) gebildet sind.

13. Anordnung nach einem der Ansprüche 1 bis 12, **dadurch gekennzeichnet, dass** die erste Führungswange und/oder die zweite Führungswange (30; 130) jeweils eine erste und eine zweite vorbestimmte Höhe zwischen etwa 70 mm und etwa 200 mm aufweisen.

## Claims

1. Set comprising a pallet (10; 110) as well as one or more trolleys (60; 160) each having a chassis (61) carried and made movable by a drive system (63), said pallet (10; 110) comprising:
- a bottom plate (20; 120) having at least one track (51, 52; 151, 152, 190) extending between a first end (21; 121) of said bottom plate (20; 120) and a second end (22; 122) of said bottom plate (20; 120), which is an opposite end to said first end (21; 121), said at least one track (51, 52; 151, 152, 190) being provided for the movement of a single row of at least one said trolley (60; 160) on said pallet (10; 110);
- a first side (11; 111) formed by said first end (21; 121) of said bottom plate (20; 120), a second side (12; 112) formed by said second end (22; 122) of said bottom plate (20; 120) and which is an opposite side to said first side (11; 111), a third side (13; 113) joining said first (11; 111) and second (12; 112) sides and a fourth side (14; 114) joining said first (11; 111) and second (12; 112) sides and which is an opposite side to said third side (13; 113);
- a first guide cheek (30; 130) mechanically connected to said bottom plate (20; 120), defining said third side (13; 113);
- a second guide cheek (30; 130) mechanically connected to said bottom plate (20; 120), defining said fourth side (14; 114);
said first and second guide cheeks (30; 130) being furthermore configured to be able to hold in position said trolley or trolleys (60; 160) guided between said third (13; 113) and fourth sides (14; 114); said set being **characterized in that**:
the first guide cheek (30; 130), having a predetermined first height, is configured to be able to guide a said trolley (60; 160), by its chassis (61), along said first guide cheek (30; 130);
the second guide cheek (30; 130), having a predetermined second height, is configured to be able to guide a said trolley (60; 160), by its chassis (61), along said second guide cheek (30; 130);
said one or more chassis (61) being received on said at least one track (51, 52; 151, 152, 190), guided thereon by said first guide cheek (30; 130) and by said second guide cheek (30; 130), and held in position between said third (13; 113) and fourth (14; 114) sides.

2. Set according to claim 1, **characterized in that** said first and second guide cheeks (30; 130) each have at least one window (34) configured to enable the insertion of at least one fork (2) of a lifting system (1), for taking said pallet (10; 110).

3. Set according to one of claims 1 and 2, **characterized in that** said bottom plate (20; 120) has at least one tunnel (27; 127) forming, on said at least one track (51, 52; 151, 152, 190), two lower sections (53; 153) separated from an upper section (54; 154), said tunnel (27; 127) being configured to enable the insertion of a fork (2) of a lifting system (1), for taking said pallet (10; 110).

4. Set according to claims 2 and 3, **characterized in that** said at least one tunnel (27; 127) comprises a first joining portion connecting one of said two lower sections (53; 153) and said upper section (54; 154), and a second joining portion connecting the other of said lower sections (53; 153) and said upper section (54; 154), and said first joining portion and said second joining portion each having at least one complementary window (57) facing said windows (34) provided in said first and second guide cheeks (30; 130).

5. Set according to any one of claims 1 to 4, **characterized in that** it comprises:
- at least one first blocking member (40; 140) mechanically connected to one or the other of the first and second guide cheeks (30; 130), at said first end (21; 121) of said bottom plate (20; 120), and movable between a first position in which said at least one track (51, 52; 151, 152, 190) is in an open state at said first end (21; 121) and a second position in which said at least one track (51, 52; 151, 152, 190) is in a closed state at said first end (21; 121);
- at least one second blocking member (40; 140) mechanically connected to one or the other of the first and second guide cheeks (30; 130), at said second end (22; 122) of said bottom plate (20; 120), and movable between a first position in which said at least one track is in an open state at said second end (22; 122) and a second position in which said at least one track (51, 52; 151, 152, 190) is in a closed state at said second end (22; 122).

6. Set according to claim 5, **characterized in that** said respective first and second blocking members (40; 140) are substantially L-shaped and each has a first arm (44; 144) mechanically connected to one or the other of the first and second guide cheeks (30; 130), and a second arm (45; 145) extending said first arm (44; 144) and configured to come to bear on the chassis (61; 161) of a trolley (60; 160).

7. Set according to claim 6, **characterized in that** said first and second blocking members (40; 140) are each provided with a portion (47) projecting from said second arm (45; 145) which is configured to raise, in said second position of said first and second respective blocking members (40; 140), a drawbar (67) mechanically connected to said chassis (61) of a said trolley (60; 160).

8. Set according to any one of claims 5 to 7, **characterized in that** said first and second respective blocking members (40; 140) are able to rotate, preferably in a first transverse plane passing substantially by said first end (21; 121) of said bottom plate (20; 120), and respectively by said second end (22; 122) of said bottom plate (20; 120).

9. Set according to claims 7 and 8, **characterized in that** said projecting portion (47) extends in a second transverse plane offset relative to said first transverse plane.

10. Set according to any one of claims 1 to 9, **characterized in that** said bottom plate (20; 120) is formed by at least two pieces of sheet metal (23, 24, 25; 123, 124, 125, 129) which are folded and assembled together.

11. Set according to any one of claims 1 to 10, **characterized in that** said first guide cheek and/or said second guide cheek (30; 130) are assembled by riveting, or screwing, or welding, or bonding with said bottom plate (20; 120).

12. Set according to any one of claims 1 to 11, **characterized in that** said first and second guide cheeks (30; 130) are generally formed by a planar plate (81).

13. Set according to any one of claims 1 to 12, **characterized in that** said first guide cheek and/or said second guide cheek (30; 130) respectively have a first and a second predetermined height comprised between approximately 70 mm and approximately 200 mm.
